(19)

Europäisches
Patentamt
European
Patent Office
Office européen
des brevets

(11) **EP 4 468 272 A1**

(12) **EUROPEAN PATENT APPLICATION**
published in accordance with Art. 153(4) EPC

(43) Date of publication:
**27.11.2024 Bulletin 2024/48**

(21) Application number: **22922152.8**

(22) Date of filing: **19.12.2022**

(51) International Patent Classification (IPC):
*G08G 1/09* (2006.01)     *G16Y 10/40* (2020.01)
*G16Y 20/20* (2020.01)     *G16Y 40/30* (2020.01)

(52) Cooperative Patent Classification (CPC):
**G05D 1/2247; G05D 1/2279; G05D 1/6987;
G08G 1/09; G16Y 10/40; G16Y 20/20; G16Y 40/30;**
G05D 2105/22; G05D 2107/13; G05D 2109/10;
G05D 2109/254

(86) International application number:
**PCT/JP2022/046670**

(87) International publication number:
**WO 2023/140002 (27.07.2023 Gazette 2023/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.01.2022  JP 2022006744**

(71) Applicant: **Panasonic Intellectual Property
Management Co., Ltd.
Kadoma-shi, Osaka 571-0057 (JP)**

(72) Inventor: **ARAI, Toshiya
Kadoma-shi, Osaka 571-0057 (JP)**

(74) Representative: **Novagraaf International SA
Chemin de l'Echo 3
1213 Onex, Geneva (CH)**

(54) **INFORMATION OUTPUT CONTROL METHOD, INFORMATION OUTPUT CONTROL DEVICE, AND PROGRAM**

(57)    An information output control method includes: outputting, in a first mode, information for monitoring or controlling a moving body that travels through automatic driving, to a terminal (20) for an operator to monitor or control the moving body remotely (S100); obtaining first information related to an event or a situation in a periphery arising when the moving body moves, and second information related to a performance of the moving body (S200, S230); determining, based on at least the first information, a likelihood that the moving body can respond to the event or the situation through autonomous control (S220); and when the likelihood determined exceeds a threshold specified based on the second information, outputting the information for monitoring or controlling the moving body to the terminal (20) in a second mode different from the first mode (S290).

FIG. 4

**Description**

[Technical Field]

The present disclosure relates to an information output control method, an information output control device, and a program.

[Background Art]

In recent years, moving bodies such as autonomous mobile robots are being used in daily life. For example, with increases in the distribution of goods, services in which autonomous mobile robots deliver products and the like are expected to spread. Such moving bodies are expected to operate in public places such as public roads and the like, and remote monitoring for safety is required during crewless autonomous travel. PTL 1, for example, discloses a technique for remotely monitoring a moving body for safety purposes.

[Citation List]

[Patent Literature]

[PTL 1] Japanese Patent No. 6566995

[Summary of Invention]

[Technical Problem]

Incidentally, the performance of a moving body, such as the accuracy of detection by a sensor installed in the moving body, is assumed to differ from moving body to moving body. It is therefore desirable for remote monitoring by a supervisor to be performed in accordance with the performance of the moving body. However, PTL 1 does not disclose remote monitoring performed in accordance with the performance of the moving body.

Accordingly, the present disclosure provides an information output control method, an information output control device, and a program which enable remote monitoring according to the performance of a moving body.

[Solution to Problem]

An information output control method according to one aspect of the present disclosure is an information output control method performed by an information output control device. The information output control method includes: outputting, in a first mode, information for monitoring or controlling a moving body that travels through automatic driving, to a terminal for an operator to monitor or control the moving body remotely; obtaining first information related to an event or a situation in a periphery arising when the moving body moves, and second information related to a performance of the moving body; determining, based on at least the first information, a likelihood that the moving body can respond to the event or the situation through autonomous control; and when the likelihood determined exceeds a threshold specified based on the second information, outputting the information for monitoring or controlling the moving body to the terminal in a second mode different from the first mode.

An information output control device according to one aspect of the present disclosure includes: a first output controller that outputs, in a first mode, information for monitoring or controlling a moving body that travels through automatic driving, to a terminal for an operator to monitor or control the moving body remotely; an obtainer that obtains first information related to an event or a situation in a periphery arising when the moving body moves, and second information related to a performance of the moving body; a peripheral situation manager that determines, based on at least the first information, a likelihood that the moving body can respond to the event or the situation through autonomous control; and a second output controller that, when the likelihood determined exceeds a threshold specified based on the second information, outputs the information for monitoring or controlling the moving body to the terminal in a second mode different from the first mode.

Additionally, a program according to one aspect of the present disclosure is a program for causing a computer to execute the above-described information output control method.

[Advantageous Effects of Invention]

According to one aspect of the present disclosure, an information output control method and the like can be realized which enable remote monitoring according to the performance of a moving body.

[Brief Description of Drawings]

[FIG. 1]

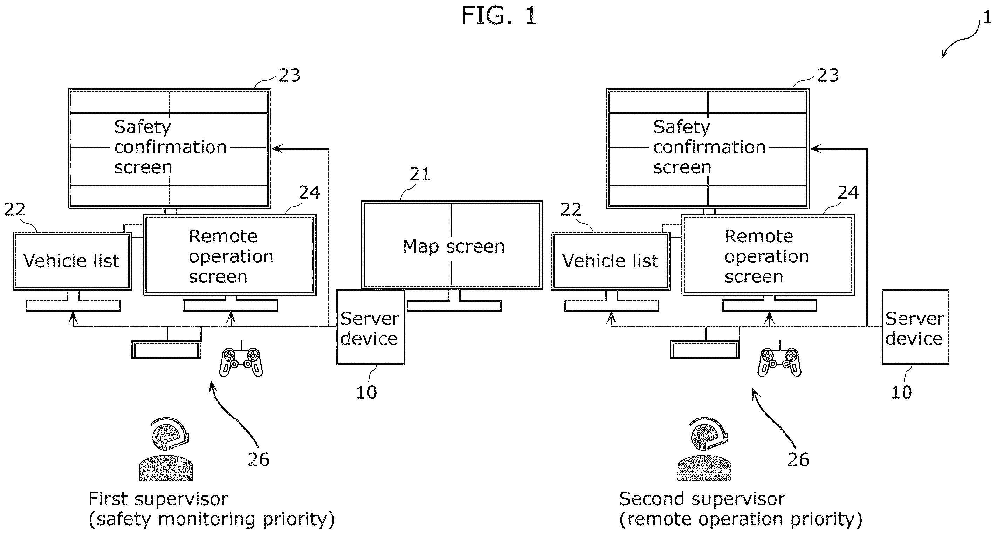

FIG. 1 is a diagram illustrating remote monitoring by a supervisor according to an embodiment.
[FIG. 2]

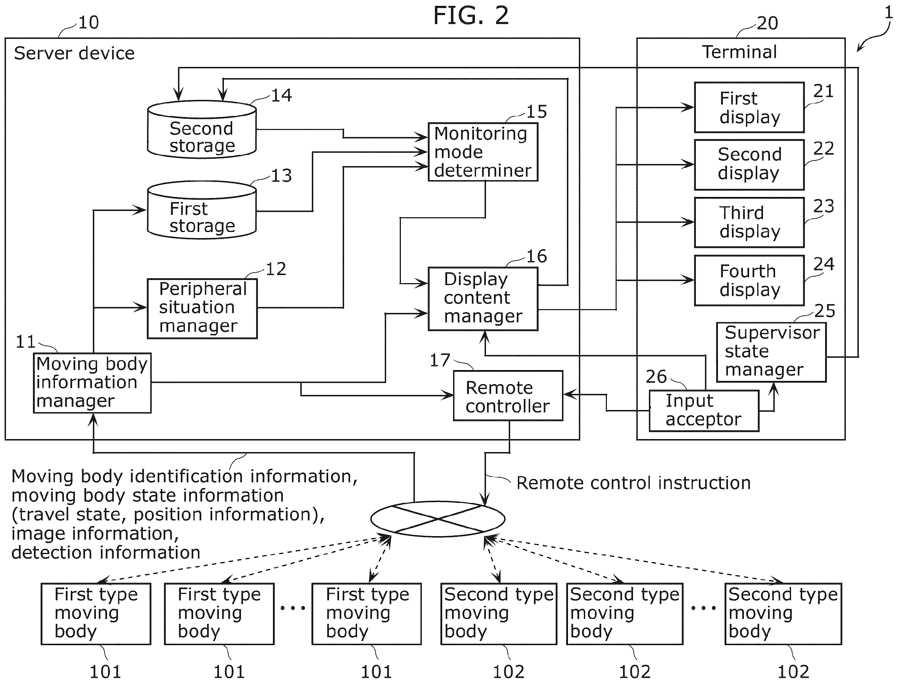

FIG. 2 is a block diagram illustrating the functional configuration of an information output system according to the embodiment.
[FIG. 3]

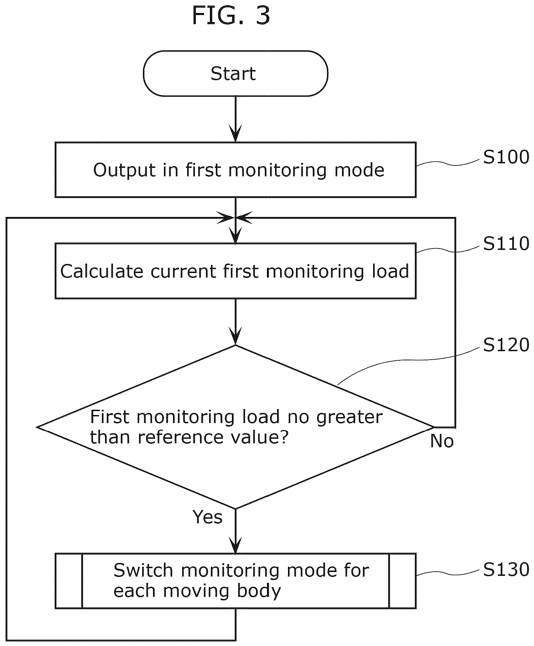

FIG. 3 is a flowchart illustrating operations by a server device according to the embodiment.
[FIG. 4]

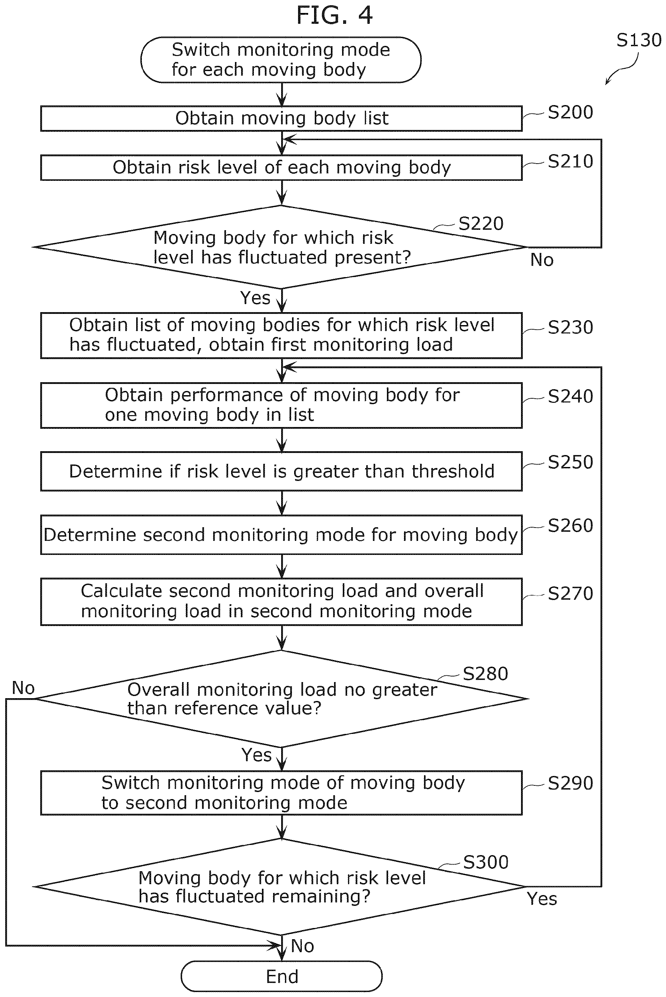

FIG. 4 is a flowchart illustrating step S130 of FIG. 3 in detail.
[FIG. 5]

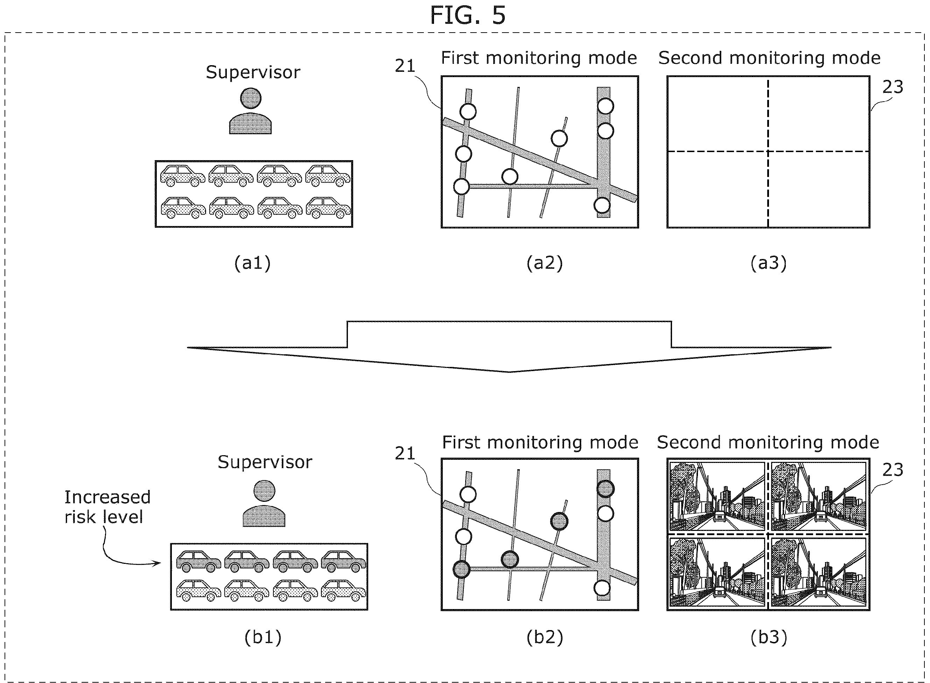

FIG. 5 is a diagram illustrating Example 1 of switching a monitoring mode according to the embodiment.
[FIG. 6]

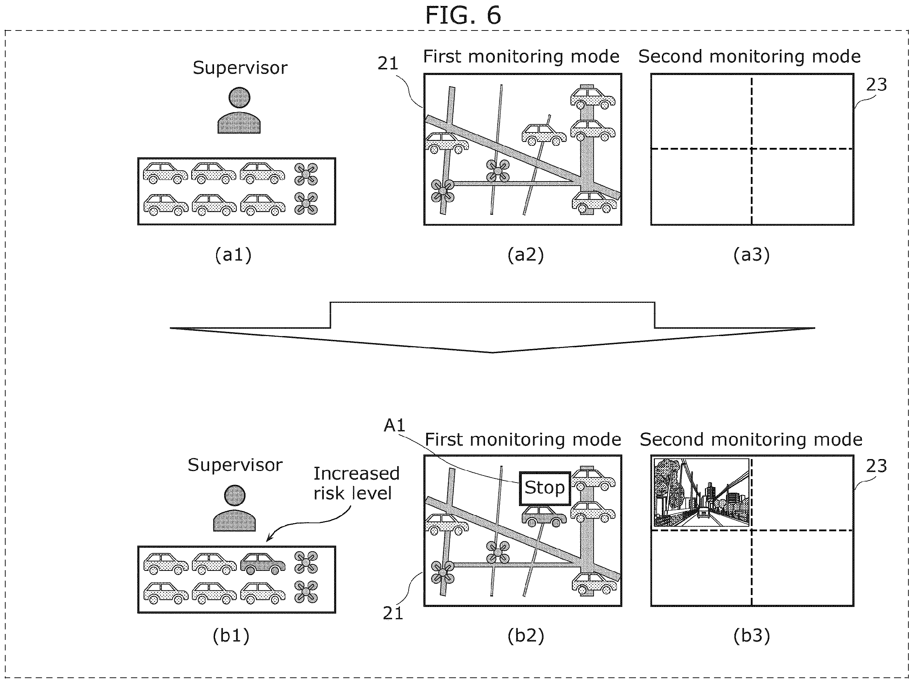

FIG. 6 is a diagram illustrating Example 2 of switching a monitoring mode according to the embodiment.
[FIG. 7]

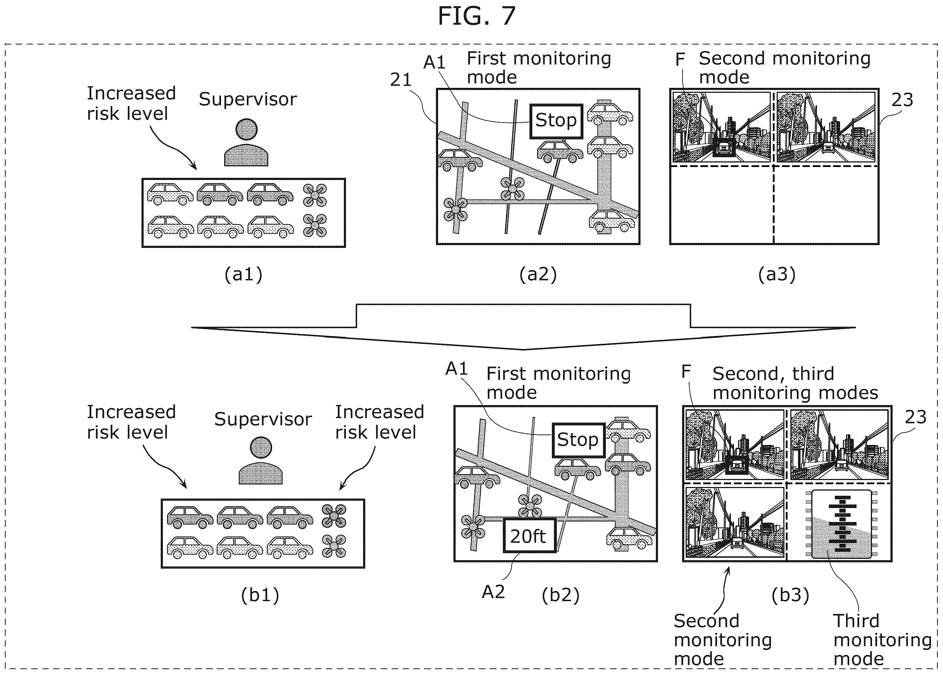

FIG. 7 is a diagram illustrating Example 3 of switching a monitoring mode according to the embodiment.
[FIG. 8]

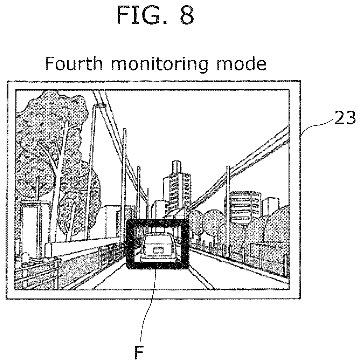

FIG. 8 is a diagram illustrating Example 4 of switching a monitoring mode according to the embodiment.
[FIG. 9]

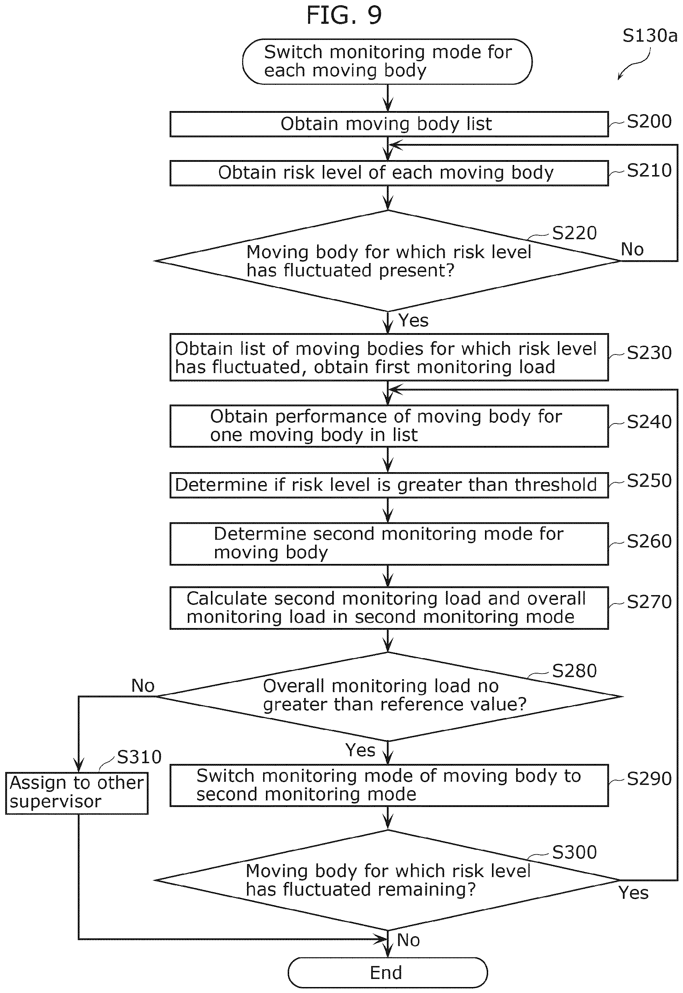

FIG. 9 is a flowchart illustrating operations by a server device according to Variation 1 on the embodiment, corresponding to step S130 of FIG. 3.
[FIG. 10]

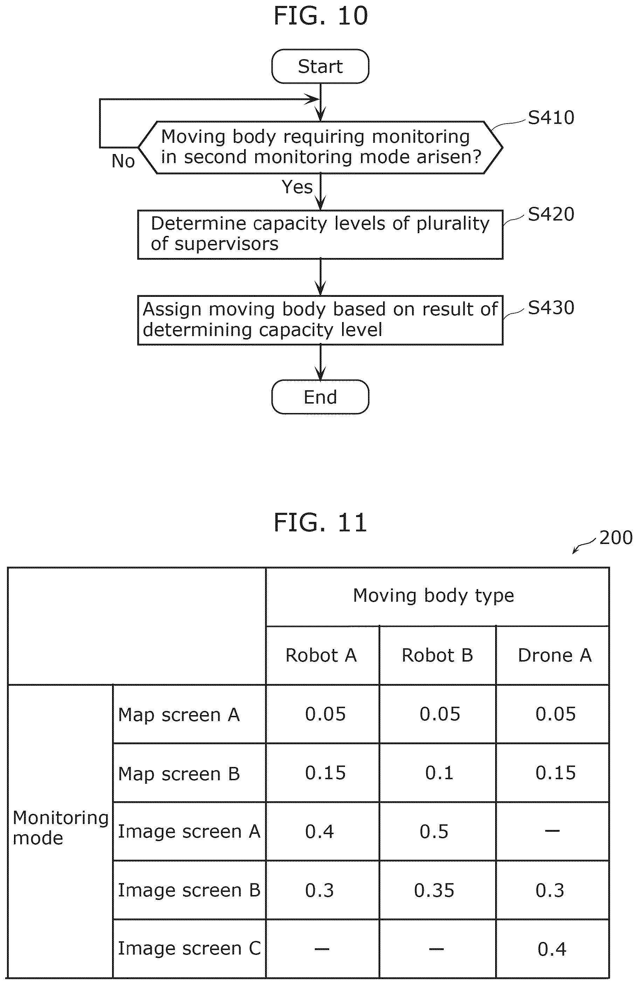

FIG. 10 is a flowchart illustrating operations by a server device according to Variation 2 on the embodiment.
[FIG. 11]
FIG. 11 is a table for determining an information detail level according to Variation 2 on the embodiment.
[FIG. 12]

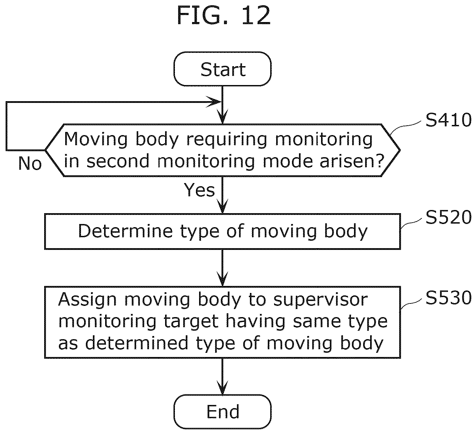

FIG. 12 is a flowchart illustrating operations by a server device according to Variation 3 on the embodiment.
[FIG. 13]

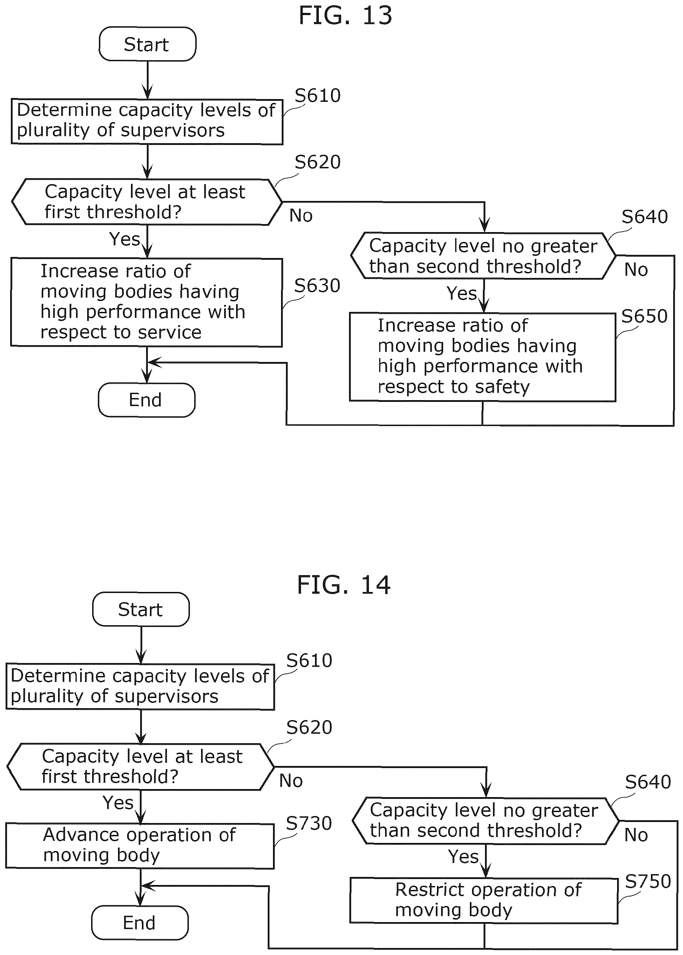

FIG. 13 is a flowchart illustrating operations by a server device according to Variation 4 on the embodiment.
[FIG. 14]
FIG. 14 is a flowchart illustrating operations by a server device according to Variation 5 on the embodiment.

[Description of Embodiments]

An information output control method according to one aspect of the present disclosure is an information output control method performed by an information output control device. The information output control method includes: outputting, in a first mode, information for monitoring or controlling a moving body that travels through automatic driving, to a terminal for an operator to monitor or control the moving body remotely; obtaining first information related to an event or a situation in a periphery arising when the moving body moves, and second information related to a performance of the moving body; determining, based on at least the first information, a likelihood that the moving body can respond to the event or the situation through autonomous control; and when the likelihood determined exceeds a threshold specified based on the second information, outputting the information for monitoring or controlling the moving body to the terminal in a second mode different from the first mode.

When a predetermined event has arisen in the moving body, or the periphery of the moving body is in a predetermined situation, the information required by the operator for remote monitoring may differ depending on the performance of the moving body (e.g., depending on whether the moving body can respond to the situation autonomously).

In the information output control method according to one aspect of the present disclosure, the mode of information for monitoring or controlling the moving body is determined using a threshold based on the performance. In other words, the information required for monitoring or control is displayed to the operator according to the performance of the moving body. Through this, according to the information output control method, remote monitoring can be performed according to the performance of the moving body.

Additionally, for example, the first information may include at least one indication among an indication that an obstruction with which the moving body may collide is detected in the periphery, an indication that the moving body has moved to a predetermined place, an indication of a state to which the moving body cannot respond through automatic driving, or an indication that a predetermined state is continuing, and the information output control method may further include obtaining a risk level indicating a level of danger of a situation the moving body is in, based on the at least one indication, as information for determining the likelihood that the moving body can respond.

Through this, according to the information output control method, the mode of the information for monitoring or controlling the moving body can be determined using the risk level.

Additionally, for example, the determining of the likelihood that the moving body can respond may be performed according to whether the risk level obtained has changed over time.

Through this, according to the information output control method, the mode of the information for monitoring or controlling the moving body can be determined using changes in the risk level over time.

Additionally, for example, the second information may include at least one item of information among a detection performance of an image capturing device provided to the moving body, a braking performance, a control performance of the automatic driving, or a presence or absence of a safety device, and the threshold may be specified based on the at least one item of information in the second information.

Through this, the mode of the information for monitoring or controlling the moving body can be determined using a threshold specified based on the performance of the moving body. As such, according to the information output control method, remote monitoring can be performed according to the performance of the moving body in a more reliable manner.

Additionally, for example, the operator may monitor or control two or more moving bodies, each being the moving body; the at least one indication in the first information and the at least one item of information in the second information may be obtained from each of the two or more moving bodies; the threshold may be specified individually for each of the two or more moving bodies based on the at least one item of information in the second information of the moving body; and whether the threshold is exceeded may be determined individually for each of the two or more moving bodies based on the first information of the moving body and the threshold of the moving body.

Through this, according to the information output control method, even if the two or more moving bodies include moving bodies having different performance, for example, information for monitoring or controlling the moving body can be output in a mode based on the performance of the moving body, for each of the moving bodies.

Additionally, for example, the first mode may be a display mode that does not include an image captured by an image capturing device provided to the moving body, and the second mode may be a display mode that includes displaying the image. Additionally, for example, the first mode may be a display mode that does not display the moving body with emphasis, and the second mode may be a display mode in which additional information for displaying the moving body with emphasis is superimposed.

Through this, when it is necessary to monitor a moving body more carefully, an image having a high information detail level is displayed for that moving body, and the operator can therefore perform the remote monitoring appropriately. On the other hand, when it is not necessary to monitor the moving body more carefully, an image having a low information detail level is displayed for the moving body, and thus according to the information output control method, the monitoring load on the operator can be reduced.

Additionally, for example, the information output control method may further include calculating a monitoring load on the operator when switching from the first mode to the second mode, and the outputting of the information for monitoring or controlling the moving body may be performed in the second mode when the monitoring load calculated is no greater than a reference value that is based on an information detail level that can be handled by the operator.

Through this, according to the information output control method, the mode of the information for monitoring or controlling the moving body can be changed when the operator has extra capacity for remote monitoring.

Additionally, for example, when the monitoring load is greater than the reference value, the outputting of the information for monitoring or controlling the moving body in the first mode may be continued.

Through this, according to the information output control method, an increase in the monitoring load on the operator can be suppressed.

Additionally, for example, the operator may monitor or control two or more moving bodies, each being the moving body, and the information output control method may further include adjusting the monitoring load on the operator to be no greater than the reference value by adjusting a total number of images displayed simultaneously.

Through this, according to the information output control method, the number of images displayed simultaneously is adjusted when the monitoring load on the operator is high, which makes it possible to reduce the monitoring load on the operator.

Additionally, for example, the information output control method may further include adjusting the monitoring load on the operator to be no greater than a reference value that is based on an information detail level that can be handled by the operator, by adjusting whether the additional information is present or absent.

Through this, according to the information output control method, the presence or absence of additional information is adjusted when the monitoring load on the operator is high, which makes it possible to reduce the monitoring load on the operator.

Additionally, for example, a plurality of moving bodies, each being the moving body, may be remotely monitored or controlled by a plurality of operators, each being the operator, and the information output control method may further include: calculating an overall information detail level that is a total of each of information detail levels of information that is displayed for corresponding ones of the plurality of operators, obtaining an overall reference value that is a reference value of an information detail level for the plurality of operators as a whole, based on an information detail level that can be handled by each of the plurality of operators, and adjusting the information detail levels displayed for the plurality of operators to make the overall information detail level no greater than the overall reference value.

Through this, according to the information output control method, when a plurality of operators are present, the information detail level is adjusted such that the total information detail level displayed for the plurality of operators is no greater than the reference value. This enables the plurality of operators to perform remote monitoring safely and under a reduced monitoring load.

Additionally, for example, when the likelihood determined does not exceed the threshold, the outputting in the first mode may be continued.

Through this, when the likelihood that the moving body can respond to a situation through autonomous control does not exceed a threshold, e.g., when the moving body can respond to the situation through autonomous control, the information detail level of the image displayed to the operator does not increase. As such, according to the information output control method, the monitoring load on the operator can be reduced.

Additionally, the second mode may be a mode in which an information detail level related to the moving body is higher than in the first mode.

Through this, according to the information output control method, it is easier for the operator to ascertain the details of the state of a moving body when the remote monitoring is performed according to the performance of the moving body.

An information output control device according to one aspect of the present disclosure includes: a first output controller that outputs, in a first mode, information for monitoring or controlling a moving body that travels through automatic driving, to a terminal for an operator to monitor or control the moving body remotely; an obtainer that obtains first information related to an event or a situation in a periphery arising when the moving body moves, and second information related to a performance of the moving body; a peripheral situation manager that determines, based on at least the first information, a likelihood that the moving body can respond to the event or the situation through autonomous control; and a second output controller that, when the likelihood determined exceeds a threshold specified based on the second information, outputs the information for monitoring or controlling the moving body to the terminal in a second mode different from the first mode. Additionally, a program according to one aspect of the present disclosure is a program for causing a computer to execute the above-described information output control method.

This provides the same effects as the above-described information output control method.

Note that these comprehensive or specific aspects may be realized by a system, a method, an integrated circuit, a computer program, or a non-transitory computer-readable recording medium such as a CD-ROM, or may be implemented by any desired combination of systems, devices, methods, integrated circuits, computer programs, or recording media. The program may be stored in advance in a recording medium, or may be supplied to the recording medium over a wide-area communication network including the Internet.

An embodiment will be described in detail hereinafter with reference to the drawings.

Note that the following embodiment describes a comprehensive or specific example of the present disclosure. The numerical values, shapes, constituent elements, arrangements and connection states of constituent elements, steps, orders of steps, and the like in the following embodiments are merely examples, and are not intended to limit the present disclosure. Additionally, of the constituent elements in the following embodiment, constituent elements not denoted in the independent claims will be described as optional constituent elements.

Additionally, the drawings are schematic diagrams, and are not necessarily exact illustrations. As such, the scales and the like, for example, are not necessarily consistent from drawing to drawing. Furthermore, configurations that are substantially the same are given the same reference signs in the drawings, and redundant descriptions will be omitted or simplified.

Additionally, in the present specification, terms indicating relationships between elements, such as "the same", numerical values, and numerical value ranges do not express the items in question in the strictest sense, and also include substantially equivalent ranges, e.g., differences of approximately several percent (e.g., approximately 10%), as well.

[Embod iment]

An information output system that executes an information output control method according to the present embodiment will be described hereinafter with reference to FIGS. 1 to 8.

[1. Configuration of Information Output System]

First, the configuration of the information output system according to the present embodiment will be described with reference to FIGS. 1 and 2. FIG. 1 is a diagram illustrating remote monitoring by a supervisor (an operator) according to the present embodiment. Although FIG. 1 illustrates two supervisors, including a first supervisor and a second supervisor, as performing the remote monitoring, the number of supervisors is not particularly limited, and there may be only one supervisor, or three or more. Note that the following will also refer to remote monitoring simply as "monitoring".

As illustrated in FIG. 1, information output system 1 includes one first display 21, a pair of second displays 22, third display 23, fourth display 24, input acceptor 26, and server device 10.

Each of the first supervisor and the second supervisor monitors one or more moving bodies (mobility entities) to be monitored using the display units, and in the present embodiment, the supervisors monitor two or more moving bodies. If the supervisor determines that it is difficult for the moving body to travel autonomously, the supervisor remotely operates the moving body using input acceptor 26. However, the configuration is not limited thereto. For example, the first supervisor and the second supervisor may perform remote control. The moving body is capable of autonomous travel, and is, for example, an autonomous mobile robot, an autonomous moving vehicle, an autonomous moving drone, or the like, but is not limited thereto. The moving body may be, for example, a work machine, or a device including a work machine. Note that "remote monitoring" refers to monitoring the moving body from a remote location away from the moving body. For example, a supervisor monitors the moving body that is in a position or situation where the moving body is not directly visible. Note that two or more moving bodies monitored by a supervisor are also referred to as "each moving body".

The first supervisor monitors using first display 21, second display 22 arranged on a left side, third display 23, and fourth display 24. The first supervisor may, for example, monitor the moving body using a map screen (e.g., a display in first display 21) and a viewer (e.g., third display 23) used mainly for managing operations on a map, and may handle temporary stops. In addition, when a remote operation request for another moving body to be monitored by the second supervisor is made while the second supervisor is handling remote operations, the first supervisor may handle remote operations of the other moving body in an individual screen (e.g., a remote operation screen displayed in fourth display 24 of the first supervisor). The first supervisor may be a supervisor who prioritizes safety monitoring (e.g., a supervisor who prioritizes checking third display 23).

The second supervisor monitors using first display 21, second display 22 arranged on a right side, third display 23, and fourth display 24. The second supervisor may mainly monitor the moving body using a map screen (e.g., a display in first display 21) and an individual screen (e.g., a vehicle list displayed in second display 22), and may handle remote operation requests. If the viewer of the first supervisor (e.g., third display 23) is displaying an image of one or more vehicles, and the image of another vehicle therefore cannot be additionally displayed (the display is full), the second supervisor may apply a temporary stop using the viewer. The second supervisor may be a supervisor who prioritizes remote operation (e.g., a supervisor who prioritizes checking second display 22).

First display 21 is a display device that performs a display corresponding to a monitoring mode in which the amount of information per moving body is low, e.g., a display in which the states of a plurality of moving bodies can be ascertained simultaneously. First display 21 may display the positions of the moving bodies to be monitored by the first supervisor and the second supervisor, respectively, for example. First display 21 may display the positions of the moving bodies to be monitored by the first supervisor and the second supervisor, respectively, superimposed on the map (on the map screen), for example. First display 21 may further display the states of the moving bodies superimposed on the map. First display 21 is shared by first supervisor and second supervisor. Note that first display 21 does not display images captured by the moving bodies.

Second display 22 is a display device that displays a list (e.g., a vehicle list) that indicates the states of the moving bodies to be monitored by the supervisor in an abstract manner. Second display 22 displays a list of the states of the moving bodies to be monitored, for example. The state of a moving body includes at least one of information indicating whether the moving body is traveling or is stopped, information related to delay in a travel plan, information related to a request from the moving body, or information related to an event that has arisen in the moving body. Note that second displays 22 may or may not display an image captured by the moving body.

Third display 23 is a display device that displays an image for confirming the safety of a moving body that is traveling or for confirming the safety of a stopped moving body when the moving body departs (or starts moving) (a safety confirmation screen), and displays an image captured of the surroundings of the moving body that is traveling or starting to move. The image is an image captured by an image capturing device installed in the moving body, but is not limited thereto. If there are a plurality of moving bodies traveling or departing, third display 23 displays images for the plurality of moving bodies. Note that third display 23 is used when the supervisor is monitoring a moving body that requires the supervisor to confirm the safety of the surroundings when traveling or starting to move. Whether it is necessary for the supervisor to confirm the safety of the surroundings when traveling or starting to move is an example of the performance of automatic driving (described later).

Note that third display 23 is not limited to displaying an image when the moving body starts moving, and may be a display device that displays an image related to a moving body which is to be monitored carefully, for example. For example, third display 23 may be a display device that displays images captured by an image capturing device provided in the moving body.

Fourth display 24 is a display device that displays information (e.g., an image) for remotely operating a moving body that has entered a state where remote operation is required, and displays an image captured by the moving body. Fourth display 24 need not perform any display if there is no moving body that requires remote operation.

Note that third display 23, fourth display 24, and the like may display any information having a high information detail level per moving body, such as a map screen or the like, and are not limited to displaying images. Third display 23, fourth display 24, and the like may display a work state if the moving body is a work machine or includes a work machine, for example. In this case, data indicating the state of the moving body, an internal or surrounding situation sensed by the moving body, or the like may be displayed in addition to or instead of an image.

"Information detail level" means the complexity of the information not in terms of the data size of the information, but rather in terms of human recognition. Although more complex information makes it possible to ascertain the state of the moving body in more detail, the effort and time required to ascertain the state is increased as well. "Information detail level" means, for example, the amount of information related to a monitoring target in a monitoring mode, and is set for each monitoring mode. For example, viewing an image from a camera provided in a moving body is more complicated in terms of human recognition than viewing a moving body on a map screen, and the information detail level is therefore set to be high, even if the data sizes are the same.

Input acceptor 26 is a user interface that accepts inputs from a supervisor, such as when remotely operating a moving body. Input acceptor 26 is a device that accepts inputs through buttons, a stick, a touch panel, or the like, but may also be a device that accepts inputs through voice, gestures, or the like, for example. Input acceptor 26 may also be a dedicated device for moving bodies.

Input acceptor 26 may also accept inputs for outputting audio in the periphery of the moving body. Input acceptor 26 may accept inputs for interacting (talking) with people or the like in the periphery of the moving body, for example. In this case, terminal 20 may cause the moving body to emit audio recorded or generated in advance, or may cause the moving body to output words spoken by the supervisor in real time.

Input acceptor 26 may also accept the input of the state of the supervisor. Input acceptor 26 accepts inputs from a supervisor indicating a state of being seated, being away from their seat, currently performing remote operations, or the like, for example.

Server device 10 is a control device for determining a monitoring mode of a moving body to be monitored by a supervisor, and causing first display 21 to fourth display 24 to perform displays in accordance with the determined monitoring mode. Server device 10 determines information necessary for monitoring the moving body, and controls the display content of first display 21 to fourth display 24 to display the determined information. Note that the connection between server device 10 and first display 21 to fourth display 24 is not particularly limited, and may be a wired connection or a wireless connection. In addition, the number of server devices 10 provided in information output system 1 may be one, or may be more than one. Server device 10 is an example of an information output control device.

Although FIG. 1 illustrates an example in which four display devices are arranged for one supervisor, the number of display devices is not limited thereto.

In this manner, in information output system 1, it is assumed that a plurality of supervisors monitor a plurality of moving bodies. In information output system 1, information related to two or more moving bodies to be monitored by the supervisors are displayed in first display 21 and second display 22. When remote control is required for one of the two or more moving bodies, an image captured by an image capturing device installed in the one moving body is displayed in fourth display 24, and a supervisor remotely controls the one moving body.

Here, when monitoring a moving body in a remote location, it is necessary for the supervisor to know the situation of the moving body and the situation in the periphery of the moving body, and using images generally provides the highest information detail level and versatility. However, from the perspective of improving the efficiency of remote monitoring, it is desirable for a single supervisor to monitor a plurality of moving bodies simultaneously, and in such a case, it is not practical for a single supervisor to confirm a plurality of images and ensure the safety of the plurality of moving bodies alone. There is also a risk that when events which need to be handled arise simultaneously, the supervisor will focus on one event, resulting in a delay in the supervisor noticing and handling the other event.

Accordingly, in the present embodiment, in such remote monitoring (or remote control) of a plurality of moving bodies, information output system 1 causes a supervisor to perform monitoring using a display with a low information detail level per moving body, such as without images, at normal times (e.g., monitoring using first display 21 or the like), and switches to monitoring using a display with a high information detail level, such as images, when necessary (e.g., monitoring using third display 23 or the like). Accordingly, even when monitoring a plurality of moving bodies simultaneously, information output system 1 can implement the remote monitoring of the plurality of moving bodies while suppressing an increase in the monitoring load on the supervisor, a drop in the focus of the supervisor, and the like, without reducing safety. Note that "monitoring load" refers to the degree of burden on the supervisor from the monitoring, and is expressed as a numerical value, for example.

The performance of two or more moving bodies monitored by the supervisor may differ. Here, "performance" includes safety performance when a moving body drives automatically, and includes, for example, at least one of the performance (e.g., resolution and angle of view) of the image capturing device provided in the moving body, the number of image capturing devices provided, the installation position of the image capturing device, sensor detection performance (e.g., sensor range and recognition rate), braking performance (e.g., brake performance), automatic driving performance (e.g., the performance of an automatic driving algorithm), object detection accuracy, and the presence or absence of a safety device such as Autonomous Emergency Braking (AEB). "Object detection accuracy" refers to the accuracy of object detection by a trained model implemented in the moving body. The performance of the moving body may also include the type of the moving body. The type of moving body includes at least one of the type of the mechanism of movement, such as a vehicle, an aircraft (e.g., a drone), or the like, the type of the location of movement, such as moving through the air, over the ground, or on rails, the type of the degree of freedom of movement, such as moving in one, two, or three dimensions, and the type of a turning performance of the moving body, such as turning, rotating in place, and the like. Information related to the performance of the moving body is stored in first storage 13. The information related to the performance of the moving body is an example of second information. It is sufficient for the second information to include at least one of the items of information described above.

Although the two or more moving bodies including moving bodies of different types (e.g., a vehicle and a drone, or the like) is given as an example of the performance of moving bodies differing, it should be noted that the performance of moving bodies may differ even when the moving bodies are of the same type (e.g., the same vehicle type). In addition, the performance of the moving bodies may differ according to differences in the model numbers of the moving bodies, differences in the manufacturers of the moving bodies, differences in the versions of software for controlling the autonomous travel of the moving bodies, and the like.

When the same event (e.g., the detection of an obstruction) arises for moving bodies having different performance, whether the moving bodies can respond to the event autonomously (whether the moving bodies can respond to the event through autonomous control) differs depending on the performance of the moving body, and accordingly, the information detail level required for the supervisor to perform the monitoring may also differ. In other words, when the same event arises for moving bodies having different performance, the information detail level required for monitoring may differ from moving body to moving body.

Accordingly, server device 10 changes the content displayed for the moving body displayed in first display 21 to fourth display 24 in consideration of the performance of the moving body, in addition to a risk level of the moving body based on the event that has arisen in the moving body or the situation in the periphery of the moving body. Server device 10 will be described in detail later.

Note that the "risk level" refers to the likelihood that the moving body can autonomously respond to a situation in which the moving body is in (e.g., an event that has arisen in the moving body or a situation in the periphery of the moving body). In the present embodiment, a higher the risk level indicates a lower likelihood that the moving body will be able to respond autonomously. The risk level can also be said to indicate the degree to which monitoring by a supervisor is required. The risk level may indicate a level of danger in the event that the moving body continues to operate autonomously, and for example, if an obstruction which the moving body may collide with is detected in the periphery of the moving body, the risk level may indicate the level of the risk of a collision between the moving body and the obstruction.

Hereinafter, the configuration of information output system 1, which changes the monitoring mode of the moving body in consideration of the performance of the moving body, will be described further with reference to FIG. 2. FIG. 2 is a block diagram illustrating the functional configuration of information output system 1 according to the present embodiment.

As illustrated in FIG. 2, information output system 1 includes server device 10 and terminal (terminal system) 20. FIG. 2 illustrates only the configuration of the part of information output system 1 corresponding to one supervisor.

Server device 10 is communicatively connected to a plurality of moving bodies (first type moving body 101 and second type moving body 102) and terminal 20, and switches the monitoring mode of the moving bodies in terminal 20 based on information obtained from the moving bodies. First type moving body 101 and second type moving body 102 are moving bodies capable of autonomous travel and of different types (e.g., different vehicle types). First type moving body 101 and second type moving body 102 differ in terms of the performance of the moving bodies, for example.

Server device 10 includes moving body information manager 11, peripheral situation manager 12, first storage 13, second storage 14, monitoring mode determiner 15, display content manager 16, and remote controller 17.

Moving body information manager 11 is a processor that manages information related to the moving body to be monitored. Moving body information manager 11 manages information obtained from the moving body over a network. Moving body information manager 11 obtains moving body identification information, moving body state information, image information, detection information, and the like from each of the plurality of moving bodies. The moving body identification information is unique identification information for identifying the plurality of moving bodies, and may be, for example, a serial number of the moving body or the like. The moving body state information is information indicating the

**EP 4 468 272 A1**

current state of the moving body, and includes, for example, a travel state, position information, and the like. The image information includes an image captured by an image capturing device provided in the moving body. The detection information includes detection results from various sensors provided in the moving body. Moving body information manager 11 obtains, for each moving body, information detected by the moving body (e.g., an obstruction detection result).

The moving body state information is an example of first information. The first information is information related to an event arising when the moving body moves or a situation in the periphery of the moving body, and may include at least one of, for example, detecting an obstruction with which the moving body may collide in the periphery of the moving body, the moving body moving to a predetermined place, a state which the moving body cannot respond to autonomously, or a predetermined state continuing. Detecting an obstruction with which the moving body may collide may be, for example, detecting that, when passing another object on a narrow road, it may not be possible to pass the object. The predetermined place may be, for example, a place where many obstructions are present, such as an intersection. The state which the moving body cannot respond to autonomously may be a state in which there is a request from an automatic driving system provided in the moving body (e.g., a request for remote control), or may be unexplained stop continuing for a predetermined time. The predetermined state continuing means that a state which requires caution is continuing, and may be, for example, a child being recognized in the periphery of the moving body for a predetermined time.

Moving body information manager 11 may generate a moving body list, in which the two or more moving bodies to be monitored by a supervisor and the first information of the moving bodies are associated based on the moving body identification information, and store the moving body list in first storage 13.

Based on the various types of information obtained from the moving body, peripheral situation manager 12 determines the situation in the periphery of the moving body. Peripheral situation manager 12 determines the risk level of each of the two or more moving bodies. Peripheral situation manager 12 determines the risk level of the moving body using a table in which, for example, the moving body or the situation in the periphery of the moving body is associated with a risk level. For example, in the table, risk level 3 may be associated with "accident detection", "emergency stop", and "collision damage reduction brake application", and risk level 2 may be associated with "person detected jumping in front of vehicle". Also, for example, in the table, "detection of object in periphery (e.g., pedestrians, other moving bodies, obstructions, and the like)" and "travel on narrow road" are associated with risk level 1, "detection of distant object" is associated with risk level 0.5, and "normal (no anomaly detected)" is associated with risk level 0. Note that the moving body or the situation in the periphery of the moving body, and the risk levels corresponding thereto, are examples, and are not limited to the above.

First storage 13 stores information related to the moving body. First storage 13 stores information obtained by moving body information manager 11 from the moving body. First storage 13 may also store information related to the performance of the two or more moving bodies. The information related to the performance of the moving body may be obtained from the moving body over a network, or may be obtained in advance and stored in first storage 13. First storage 13 may also store the risk levels of the two or more moving bodies obtained previously.

Second storage 14 stores information related to the supervisor. Second storage 14 stores the state of the supervisor, a handling capacity of the supervisor, and the like. The state of the supervisor indicates the current state of the supervisor, and is, for example, being seated, being away from their seat, performing remote operations, or the like. In addition, the handling capacity of the supervisor indicates the information detail level that the supervisor can handle (e.g., including information indicating how many moving bodies' information can be handled). The information detail level that can be handled by the supervisor may be set in advance assuming the information detail level that can be handled by any person, regardless of whether they are a supervisor (e.g., monitoring images being limited to four screens at a same time, or the number of moving bodies displayed on the map being limited to 10); may be set in advance for each supervisor based on the supervisor's experience in monitoring a plurality of moving bodies or based on the supervisor's monitoring skill; or may be set in advance for each supervisor based on the time the supervisor has taken for monitoring in the past.

Additionally, the information detail level that can be handled by the supervisor may be set based on a rapid response task required for control. "Rapid response task" is a task that requires the supervisor to perform an operation for avoiding danger, e.g., emergency braking or the like. The information detail level that can be handled by the supervisor is set to be lower when the supervisor is monitoring a moving body that requires a rapid response task than when the supervisor is not monitoring a moving body that requires a rapid response task. In addition, the information detail level that can be handled by the supervisor may be set according to the current state of the supervisor. The current state of the supervisor may be estimated from the posture of the supervisor, such as whether the supervisor is seated, away from their seat, or performing remote operations, or may be obtained by the supervisor entering the state into input acceptor 26.

Based on the risk level of the moving body and the performance of the moving body, monitoring mode determiner 15 determines the monitoring mode used when remotely monitoring the moving body. Based on the risk level of the moving body and the performance of the moving body, monitoring mode determiner 15 determines whether there is a possibility that the moving body cannot respond to the situation autonomously, and if there is a possibility that the moving body cannot respond to the situation autonomously, switches the monitoring mode of the moving body to a monitoring mode that increases visibility. If there is a possibility that the moving body cannot respond to the situation autonomously, for example, monitoring mode determiner 15 can be said to switch from a first monitoring mode, in which the amount of information per moving body is low, to a second monitoring mode, in which the amount of information per moving body is higher than in the first monitoring mode. For example, monitoring mode determiner 15 may switch from the first monitoring mode, in which the information detail level related to the moving body is low, to the second monitoring mode, in which the information detail level is higher than in the first monitoring mode.

The first monitoring mode may be a highly list-based general monitoring mode, and the second monitoring mode may be a monitoring mode that shows the details of a specific moving body. In addition, the first monitoring mode may be a monitoring mode for monitoring a moving body in a situation that can be responded to autonomously, and the second monitoring mode may be a monitoring mode for monitoring a moving body that cannot or may not be able to respond to the situation autonomously. The first monitoring mode is an example of a first mode, and the second monitoring mode is an example of a second mode.

Although details will be given later, monitoring mode determiner 15 has the functions of a first output controller that outputs information in the first monitoring mode (an example of the first mode), and a second output controller that outputs information in the second monitoring mode (an example of the second mode) that is different from the first monitoring mode. In the present embodiment, the second monitoring mode is a monitoring mode that has a higher information detail level than in the first monitoring mode.

Note that the monitoring mode which increases the visibility (the second monitoring mode) may be displaying an object detected by the moving body (e.g., displaying the object superimposed on the display in any of the displays), or, when a plurality of multiple objects are detected by the moving body may be displaying an object in the path of travel (an object related to automatic driving by the moving body). In addition, the monitoring mode that increases the visibility may be displaying an object that requires attention in the image with emphasis, displaying or emphasizing an object that is a factor in an alert made when a plurality of objects are present, or displaying content that the supervisor should handle with the object.

In addition, the monitoring mode that increases the visibility may be displaying an alert for a situation known to be impossible for the moving body to respond to (or for which the frequency of intervention in the past has been high) with particular emphasis; or displaying the entire image with emphasis in a situation where the moving body cannot travel in an anticipated travel situation (path of travel, unanticipated steps/path width/obstructions, or the like); or, when a direction corresponding to a blind spot for the moving body is known or the camera range is not the entire periphery, displaying information to that effect. In addition, the monitoring mode that increases the visibility may be displaying information indicating that caution is required because a moving body having high step climbing performance may become entangled with a small object.

Monitoring mode determiner 15 individually determines the monitoring mode of each of two or more moving bodies to be monitored by one supervisor. In addition, monitoring mode determiner 15 determines the monitoring modes of the moving bodies to be monitored by the supervisor for each of the plurality of supervisors.

In accordance with the monitoring mode of the moving body determined by monitoring mode determiner 15, display content manager 16 determines the display content for monitoring the moving body. Display content manager 16 causes each display to output a display according to the monitoring mode of the moving body determined by monitoring mode determiner 15.

Remote controller 17 generates a remote control instruction for remotely operating a corresponding moving body based on an input related to remote operation obtained through input acceptor 26, and outputs a remote operation instruction to the respective moving body.

Terminal 20 includes first display 21, second display 22, third display 23, fourth display 24, supervisor state manager 25, and input acceptor 26. First display 21, second display 22, third display 23, fourth display 24, and input acceptor 26 are as described with reference to FIG. 1.

Supervisor state manager 25 manages the state of the supervisor. Supervisor state manager 25 determines the state of the supervisor in accordance with an input accepted through input acceptor 26, and stores the determination result in second storage 14. In the case where there are a plurality of supervisors, supervisor state manager 25 determines the state of each of the plurality of supervisors, and stores the determination result in second storage 14. Note that supervisor state manager 25 may determine the state of the supervisor based on a detection result from a sensor (not shown, but for example, an image capturing device) that can determine the state of the supervisor.

[2. Operations of Information Output System]

Operations performed in information output system 1 configured as described above will be described next with reference to FIGS. 3 to 8. FIG. 3 is a flowchart illustrating operations by server device 10 (an information output control method) according to the present embodiment.

As illustrated in FIG. 3, monitoring mode determiner 15 of server device 10 outputs, in the first monitoring mode, information for monitoring or controlling a moving body that travels through automatic driving, to terminal 20 for the supervisor to monitor or control the moving body remotely (S100). Specifically, monitoring mode determiner 15 outputs information indicating monitoring in the first monitoring mode to display content manager 16, and display content manager 16 causes each display to display an image for monitoring in the first monitoring mode.

Next, server device 10 calculates a current first monitoring load on the supervisor based on the monitoring mode of each moving body currently being monitored by the supervisor (S110). Here, server device 10 calculates the first monitoring load for when the monitoring mode of each moving body is the first monitoring mode. Server device 10 may calculate the current first monitoring load on the supervisor based on, for example, how many screens the supervisor is using to monitor images, and how many moving bodies are displayed on the map. The method for calculating the first monitoring load is not particularly limited, and may be performed using a predetermined calculation formula, or may be performed using a lookup table (LUT) or the like. The first monitoring load calculated in step S110 may be stored in association with the identification information of the moving body.

Next, server device 10 determines whether the first monitoring load is no greater than a reference value (S120). The reference value is a value based on the handling capacity of the supervisor, and is stored in advance in storage or the like. The reference value is a value according to the information detail level that can be handled by the supervisor, for example.

Next, if the first monitoring load is no greater than the reference value (Yes in S120), server device 10 performs processing for switching the monitoring mode for each moving body (S130), whereas if the first monitoring load is greater than the reference value (No in S120), server device 10 returns to step S110 and continues the processing.

The processing of steps S110 to S130 is executed periodically, for example, but is not limited thereto.

In this manner, if the first monitoring load on the supervisor is no greater than the reference value, i.e., if the supervisor has extra capacity for monitoring, the processing for switching the monitoring mode is executed. Through this, server device 10 can suppress situations where the monitoring load on the supervisor increases to the point where remote monitoring cannot be performed safely.

The processing illustrated in FIG. 3 may be performed for each of the plurality of supervisors individually, or for the plurality of supervisors collectively. When performed collectively for the plurality of supervisors, the first monitoring load is the total value of the monitoring loads for the plurality of supervisors, and the reference value is a value determined based on the handling capacity of each of the plurality of supervisors.

Operations performed in step S130 of in FIG. 3 will be described next with reference to FIG. 4. FIG. 4 is a flowchart illustrating step S130 of FIG. 3 in detail. The operations illustrated in FIG. 4 are executed individually for each of the plurality of supervisors.

As illustrated in FIG. 4, peripheral situation manager 12 of server device 10 obtains a list the moving bodies to be monitored by the supervisor (the moving body list) (S200). Peripheral situation manager 12 obtains the moving body list by reading the moving body list from first storage 13. Because the moving body list includes the first information, it can be said that peripheral situation manager 12 obtains the first information of each moving body in step S210. Peripheral situation manager 12 may further obtain risk information indicating a past risk level of each moving body from first storage 13.

Next, peripheral situation manager 12 obtains the risk level of each moving body based on the first information (S210). Peripheral situation manager 12 determines the current risk level of the moving body based on an event that has arisen in the moving body, a detection result (situation) detected by a sensor or the like in the moving body, or the like. Peripheral situation manager 12 determines the risk level for each of the moving bodies included in the moving body list. Determining the risk level is an example of determining the likelihood that the moving body can respond to an event that has arisen in the moving body, or a situation, through autonomous control. Note that the second information may further be used in the determination made in step S220.

Peripheral situation manager 12 then outputs the obtained risk level to monitoring mode determiner 15. Peripheral situation manager 12 functions as an obtainer that obtains the first information.

Next, monitoring mode determiner 15 determines whether there is a moving body for which the risk level has fluctuated (S220). Based on time-series data of the risk level of each moving body, monitoring mode determiner 15 makes the determination of step S220 for each of the moving bodies. Note that the risk level having fluctuated may be that a past (e.g., one previous) risk level and the current risk level are different, or that the previous and current risk levels differ by at least a predetermined amount.

Monitoring mode determiner 15 generates a list of the moving bodies for which a determination of Yes was made in step S220. The list includes information identifying each moving body, for example.

Next, if a moving body for which the risk level has fluctuated is present (Yes in S220), monitoring mode determiner 15 obtains a list of the moving bodies for which the risk level has fluctuated, and obtains the first monitoring load (S230). Monitoring mode determiner 15 obtains the first monitoring load (e.g., the first monitoring load calculated in step S110) for the moving bodies included in the list, based on the identification information of the moving bodies included in the list. The processing from step S240 on is executed individually for each moving body. The processing from step S240 on may be executed in order from the moving body having the highest risk level.

Next, monitoring mode determiner 15 obtains the performance of the moving body for one of the moving bodies in the list (S240). It can be said that monitoring mode determiner 15 obtains the second information related to the performance of the moving body in step S240. Note that if no moving body for which the risk level has fluctuated is present (No in S220), monitoring mode determiner 15 returns to step S210 and continues the processing. Monitoring mode determiner 15 functions as an obtainer that obtains the second information.

Next, monitoring mode determiner 15 determines whether the risk level (an example of a determined likelihood) exceeds (satisfies) a reference level specified based on the performance of the moving body. In the present embodiment, monitoring mode determiner 15 determines whether the risk level is greater than the reference level (a threshold) (S250). In the present embodiment, the reference level is set to a higher value as the performance of the moving body increases, e.g., as the number of situations which the moving body can respond to autonomously increases. The reference level can be obtained based on a table in which the performance of the moving body and the reference level are associated, and is an example of a threshold. Monitoring mode determiner 15 may use the performance of the moving body and the table to specify the reference level. The table is stored, for example, in first storage 13 in advance.

For example, if the risk level rises due to a person jumping in front of the moving body being detected, and a determination of Yes is made in step S220, the risk level is determined to be no greater than the reference level in step S250 when the moving body has performance capable of responding to the person jumping in front through autonomous control, and the risk level is determined to be greater than the reference level in step S250 when the moving body does not have performance capable of responding to the person jumping in front through autonomous control. Note that the risk level being greater than the reference level is an example of exceeding the threshold (not satisfying the threshold), and the risk level being no greater than the reference level is an example of not exceeding the threshold (satisfying the threshold).

In the table, for example, if the resolution of the image capturing device in the moving body is high, objects that are far away can be detected, and thus the reference level is associated with a first value; if the resolution is low, only nearby objects can be detected, and thus the reference level is associated with a second value lower than the first value.

Monitoring mode determiner 15 makes the determination of step S250 by comparing the risk level of the moving body with the determined reference level. The reference level is a value set for each moving body in accordance with the performance of the moving body. This makes it possible for server device 10 to change the monitoring mode of a moving body which may not be able to respond to a situation autonomously depending on the performance of the moving body to a monitoring mode having better visibility, even if the risk levels are the same for two moving bodies (the situations of the two moving bodies are the same).

Next, monitoring mode determiner 15 determines the second monitoring mode for the moving body (S260). Monitoring mode determiner 15 determines the monitoring mode of the moving body having a risk level greater than the reference level to be in the second monitoring mode. It can also be said that in step S260, monitoring mode determiner 15 determines to switch the information for monitoring or controlling the moving body to the second monitoring mode, which has a higher information detail level related to the moving body than the first monitoring mode. In addition, monitoring mode determiner 15 keeps the monitoring mode of the moving body for which the risk level is no greater than the reference level at the first monitoring mode. Monitoring mode determiner 15 can also be said to continue outputting in the first monitoring mode. Note that whether to switch to the second monitoring mode may be set in advance, or the second monitoring mode may be switched to according to the performance of the moving body or an event or a situation in the periphery currently arising for the moving body.

Next, monitoring mode determiner 15 calculates a second monitoring load and an overall monitoring load for the second monitoring mode (S270). In other words, monitoring mode determiner 15 calculates the monitoring load (second monitoring load) on the supervisor for when the monitoring mode of the moving body determined to be switched to the second monitoring mode in step S260 is switched from the first monitoring mode to the second monitoring mode. Then, monitoring mode determiner 15 calculates the overall monitoring load, which is the total of the monitoring loads of the moving bodies monitored by the supervisor, for when the monitoring mode of the moving body is the second monitoring mode. The overall monitoring load is the sum of the first monitoring load of the moving bodies in the first monitoring mode and the second monitoring load of the moving bodies in the second monitoring mode, for the moving bodies.

Next, monitoring mode determiner 15 determines whether the overall monitoring load is no greater than a reference value (S280). The reference value is a reference value based on the supervisor, and although the same value as the reference value used in step S120 is used here, a different value may be used. Note that at the time of step S280, the monitoring mode of the moving body remains the first monitoring mode.

Next, if the overall monitoring load is no greater than the reference value (Yes in S280), monitoring mode determiner 15 switches the monitoring mode of the moving body to the second monitoring mode (S290). In other words, monitoring mode determiner 15 executes processing for switching the monitoring mode of the moving body to the second monitoring mode determined in step S260, in response to a determination of Yes being made in step S280. Specifically, monitoring mode determiner 15 outputs information indicating the moving body to be monitored in the second monitoring mode to display content manager 16. In other words, monitoring mode determiner 15 outputs information for monitoring or controlling the moving body in the second monitoring mode.

Note that if the overall monitoring load is greater than the reference value (No in S280), monitoring mode determiner 15 ends the process of switching the monitoring mode. In other words, if a determination of No is made in step S280, the monitoring mode is not switched for the moving body. If the overall monitoring load is greater than the reference value, monitoring mode determiner 15 continues the output of the information for monitoring or controlling the moving body in the first monitoring mode.

Next, monitoring mode determiner 15 determines whether a moving body for which the risk level has fluctuated remains (S300). Monitoring mode determiner 15 determines whether the processing of step S240 and on has been performed for each of the moving bodies for which a determination of Yes is made in step S220. If a moving body for which the risk level has fluctuated remains (Yes in S300), monitoring mode determiner 15 returns to step S240 and executes the processing of step S240 and on for the remaining moving body. If no moving body for which the risk level has fluctuated remains (No in S300), the processing of switching the monitoring mode ends.

Note that in step S280, the content of the second monitoring mode may be changed such that a determination of Yes is made. For example, the monitoring load may be reduced by reducing the number of images displayed simultaneously in the second monitoring mode, and the monitoring mode may be switched to a monitoring mode for which a determination of Yes will be made in step S280. For example, the monitoring load on the supervisor may be adjusted to be no greater than the reference value, based on at least one of the number of images displayed simultaneously and the presence or absence of additional information (described later).

Note that when a plurality of supervisors are monitoring or controlling a plurality of moving bodies remotely, an overall information detail level, which is a total of the information detail levels displayed for the plurality of supervisors, may be calculated; an overall reference value, which is a reference value for the overall information detail level for the plurality of supervisors based on the information detail level that can be handled by each of the plurality of supervisors, may be obtained; and the information detail level displayed for the plurality of supervisors may be adjusted such that the overall information detail level is no greater than the overall reference value.

Although the foregoing describes a case where the risk level is determined to have risen in step S220, there are cases where the risk level is determined to have fallen. If the risk level of the moving body falls, monitoring mode determiner 15 may return the monitoring mode of the moving body from the second monitoring mode to the first monitoring mode. In this case, the processing from step S230 on is not performed.

Specific examples of switching the monitoring mode will be described here with reference to FIGS. 5 to 8. FIG. 5 is a diagram illustrating Example 1 of switching the monitoring mode according to the present embodiment. FIG. 5 illustrates an example in which there are eight moving bodies to be monitored by the supervisor, and the eight moving bodies are all of the same type (e.g., vehicles).

(a1) in FIG. 5 is a schematic diagram of the risk level of each moving body before the risk level changes. (a2) illustrates an image displayed in first display 21 before the risk level changes, and the position of each moving body is displayed on the map (indicated by white circles in the figure). (a3) illustrates the display in third display 23 before the risk level changes, and indicates that nothing is displayed in third display 23. In this manner, before the risk level changes, monitoring is performed in a monitoring mode in which there is a low amount of information per moving body. Note that as indicated by the broken line in (a3), third display 23 may be divided into four regions, and images from different moving bodies may be displayed in each of the four regions. Because images in four screens can be monitored by the supervisor simultaneously, the number of divisions is four in (a3) in FIG. 5.

(a1) to (a3) in FIG. 5 illustrate the content displayed by each display before step S130 of FIG. 3 is executed.

(b1) in FIG. 5 is a schematic diagram of the risk level of each moving body after the risk level changes, and indicates that the risk level has risen for the four moving bodies in the upper row. (b2) illustrates an image displayed in first display 21 after the risk level changes, and information is displayed indicating the position of each moving body on the map and the moving bodies for which the risk level has risen (indicated by dark circles in the figure). (b3) illustrates the display in third display 23 after the risk level changes, and indicates that the images from the four moving bodies for which the risk level has risen are displayed in third display 23. In this manner, for the moving bodies for which the risk level has fluctuated, the monitoring is performed in a monitoring mode in which there is a high amount of information per moving body.

In this manner, the first monitoring mode may be a display mode that does not include an image captured by an image capturing device provided in the moving body, and the second monitoring mode may be a display mode that includes displaying an image.

FIG. 6 is a diagram illustrating Example 2 of switching the monitoring mode according to the present embodiment. FIG. 6 illustrates an example in which there are eight moving bodies to be monitored by the supervisor, and moving bodies of different types are monitored. In the example in FIG. 6, six of the eight moving bodies are of the same type as each other (e.g., vehicles), and the remaining two are of the same type as each other (e.g., drones).

(a1) in FIG. 6 is a schematic diagram of the risk level of each moving body before the risk level changes. (a2) illustrates an image displayed in first display 21 before the risk level changes, and the image is displayed such that the position of each moving body and the type of each moving body can be seen. (a3) illustrates the display in third display 23 before the risk level changes, and indicates that nothing is displayed in third display 23. In this manner, before the risk level changes, monitoring is performed in a monitoring mode in which there is a low amount of information per moving body.

(b1) in FIG. 6 is a schematic diagram of the risk level of each moving body after the risk level changes, and indicates that the risk level has risen for the moving body (vehicle) on the right side of the upper row. (b2) illustrates an image displayed in first display 21 after the risk level changes, and information A1 indicating the situation of the moving body is superimposed on the map in addition to the content illustrated in (a2). (b3) illustrates the display in third display 23 after the risk level changes, and indicates that the images from the one moving body for which the risk level has risen are displayed in third display 23. In this manner, for the moving bodies for which the risk level has fluctuated, the monitoring is performed in a monitoring mode in which there is a high amount of information per moving body. Information A1 is an example of additional information. Note that the additional information may be information indicating at least one of an event that is arising, a travel state of the moving body, a state of automatic driving, or the like.

Although (b3) illustrates an example in which the image is displayed in one quarter of the screen, the image may be displayed on the whole screen, for example.

Note that in (b3) in FIG. 6, the image from the moving body for which the risk level has risen need not be displayed in third display 23. As illustrated in (b2) in FIG. 6, information A1 may be displayed only in first display 21. The image in which information A1 is superimposed is an image switched to increase the visibility. In other words, the image illustrated in (b2) in FIG. 6 may be used as the image for the second monitoring mode.

As illustrated in (a2) and (b2) in FIG. 6, the first monitoring mode may be a display mode that does not display the moving bodies with emphasis, and the second monitoring mode may be a display mode in which additional information for emphasizing the moving body having an increased risk level (for which a determination of Yes is made in step S220) is superimposed.

FIG. 7 is a diagram illustrating Example 3 of switching the monitoring mode according to the present embodiment. FIG. 7 illustrates an example in which there are eight moving bodies to be monitored by the supervisor, and the risk level rises for each of moving bodies of different types. In the example in FIG. 7, six of the eight moving bodies are of the same type as each other (e.g., vehicles), and the remaining two are of the same type as each other (e.g., drones).

(a1) in FIG. 7 is a schematic diagram of the risk level of each moving body at time t2, and indicates that the risk level of the two moving bodies (vehicles) in the middle of the upper row has risen from time t1 before time t2. (a2) illustrates an image displayed in first display 21 at time t2, and information A1 indicating the situation of the moving body is displayed superimposed on the map in additions to the position of each moving body and the type of each moving body. (a3) illustrates the image displayed in third display 23 at time t2, and indicates that the images from the two moving bodies for which the risk level has risen from time t1 are displayed in third display 23. Note that if there is an object which needs to be monitored more carefully, a monitoring mode may be used in which the visibility of the object is further increased. (a3) in FIG. 7 illustrates an example in which an object is surrounded by frame F as an example of emphasis. Frame F is an example of the additional information.

(b1) in FIG. 7 is a schematic diagram of the risk level of each moving body at time t3 after time t2, and indicates that the risk level has risen between time t2 and time t3 for the four moving bodies in the upper row (three vehicles and one drone). (b2) illustrates an image displayed in first display 21 at time t3, and information A2 indicating the situation of the moving body (the drone) is displayed on the map in addition to (a2). (b3) illustrates the image displayed in third display 23 at time t3, and indicates that the images from the four moving bodies for which the risk level has risen are displayed in third display 23. Here, the image displayed in third display 23 is an image corresponding to the type of the moving body. The monitoring mode for the drone will also be referred to as a third monitoring mode.

In this manner, in the post-change monitoring mode, the display content is displayed in accordance with the type of the moving body. In the post-change monitoring mode, the display content may be displayed in accordance with a factor causing the rise in the risk level.

Although the four images are displayed at equal sizes in (b3), the sizes may be different. For example, the size of the image may be different for each type of moving body.

FIG. 8 is a diagram illustrating Example 4 of switching the monitoring mode according to the present embodiment. FIG. 8 illustrates an example in which the image in the upper-left corner of (b3) in FIG. 7 is displayed in the whole screen of third display 23.

As illustrated in FIG. 8, even when the risk level has risen for a plurality of moving bodies, there may be a monitoring mode (a fourth monitoring mode) in which one moving body in particular is monitored for intervention such as troubleshooting.

[Variation 1 on Embodiment]

An information output control method according to the present variation will be described next with reference to FIG. 9. FIG. 9 is a flowchart illustrating operations by a server device according to the present variation, corresponding to step S130 of FIG. 3. In the present variation, step S130a in FIG. 9 is executed instead of step S130 in FIG. 3. The following variations will focus on descriptions of the differences from the embodiment, and descriptions of content that is the same as or similar to the embodiment will be omitted or simplified. The configuration of an information output system that executes the information output control method according to each of the variations is similar to that in the embodiment, and will be described using the reference signs from the embodiment. Additionally, the processing in each variation described below may be executed by any of a plurality of the functional configurations included in server device 10.

As illustrated in FIG. 9, if the overall monitoring load on one supervisor is greater than the reference value (No in S280), server device 10 assigns a moving body to be monitored by the one supervisor to another supervisor (S310). Server device 10 assigns a moving body of the one supervisor, which is in the second monitoring mode, to be monitored by the other supervisor.

In addition, when a task arises, such as when it is necessary for a supervisor to check the situation of a specific moving body for safety confirmation, server device 10 may switch the monitoring of a moving body, which is being monitored by that supervisor in another monitoring mode having a high information detail level, to be monitored by the other supervisor, in accordance with a change in the risk level or the like.

[Variation 2 on Embodiment]

The present variation will describe, with reference to FIG. 10, an information output control method for evening (making uniform) the monitoring burden on a plurality of supervisors. FIG. 10 is a flowchart illustrating operations by server device 10 according to the present variation. FIG. 10 illustrates an example of a method for assigning, to a supervisor, a moving body that has been switched from being monitored using a map screen in which the position and the like of each moving body is displayed (the first monitoring mode) to being monitored using an image (the second monitoring mode).

As illustrated in FIG. 10, server device 10 determines, based on the risk level and performance of each of the plurality of moving bodies being monitored using the map screen, whether there is a moving body which needs to be monitored in the second monitoring mode (S410). For example, if in step S250 of FIG. 4 the risk level has been determined to be greater than the reference level (threshold), a determination of Yes is made in step S410, and if the risk level has not been determined to be greater than the reference level (threshold), a determination of No is made in step S410. If a determination of No is made in step S410, the processing returns to step S410 and is continued.

Next, if a moving body that needs to be monitored in the second monitoring mode is determined to be present (Yes in S410), server device 10 determines a capacity level for the plurality of supervisors based on the monitoring burdens of the plurality of supervisors (S420). Server device 10 determines the capacity level for each of the plurality of supervisors.

An information detail level $D(i) = d(c(i), k(i))$ used to determine the capacity level is determined based on moving body type c (type of moving body) and monitoring mode k. The information detail level will be described here with reference to FIG. 11. FIG. 11 illustrates table 200 for determining an information detail level according to the present variation. The moving body types are "robot A", "robot B", and "drone A", and the monitoring modes are "map screen A", "map screen B", and "image screen A" to "image screen C". Map screens A and B are screens common to robots and drones. Image screen A is a screen on which images for monitoring robots are displayed, image screen B is a screen on which images for monitoring robots and drones are displayed, and image screen C is a screen on which images for monitoring robots are displayed.

As illustrated in FIG. 11, information detail level D is set in advance for each combination of moving body type c and monitoring mode. Server device 10 may store table 200 illustrated in FIG. 11 in advance, for example.

When a handling capacity level, which is the maximum information detail level the supervisor can handle, is represented by T, the number of moving bodies to be monitored is represented by n, and the information detail level determined based on moving body type c(i) of moving body M(i) and the current monitoring mode k(i) is represented by $d(c(i), k(i)) = D(i)$, the capacity level is expressed through the following Formula 1.

[Math. 1]

$$\text{Capacity level} = T - \sum_{i}^{n} D(i) \quad \text{(where n = a natural number 2 or higher)}$$

$$\dots \text{(Formula 1)}$$

Although the capacity level is a value obtained by adding information detail level D(i) of each of the plurality of moving bodies monitored by the supervisor, it is sufficient that the capacity level for monitoring by the supervisor be indicated. Handling capacity level T is set in advance for each of the plurality of supervisors. Additionally, information detail level D(i) is set in advance for each monitoring mode, for example. For example, compared to monitoring using a map screen in which text related to remote monitoring is displayed (e.g., the first monitoring mode), monitoring using images (e.g., the second monitoring mode) has a higher information detail level. Additionally, handling capacity level T is, for example, 1, and information detail level D(i) may be, for example, a numerical value greater than 0 and no greater than 1.

Next, server device 10 assigns the moving body for which a determination of Yes was made in step S410 based on the result of determining the capacity level (S430). Server device 10 assigns the monitoring of that moving body to a supervisor having a high capacity level (that is, a small monitoring load) among the plurality of supervisors, for example.

Through this, server device 10 can assign a moving body that needs to be monitored in the second monitoring mode to a supervisor having a high capacity level, which makes it possible to suppress a situation where the capacity level of a specific supervisor drops. This leads to the monitoring burden placed on supervisors being even (uniform).

Server device 10 may further assign the moving body using the safety performance of the moving body. For example, if the safety performance of the moving body for which a determination of Yes was made in step S420 is high (e.g., at least a threshold), server device 10 may assign the moving body to a supervisor having a capacity level that is low or is less than a predetermined value, and if the safety performance of the moving body is low (e.g., less than the threshold), server device 10 may assign the moving body to a supervisor having a capacity level that is high or at least the predetermined value. In this manner, server device 10 may preferentially assign a moving body having high safety performance (e.g., a moving body having a low likelihood of being monitored in the second monitoring mode) to a supervisor having a capacity level that is low or less than a predetermined value, and preferentially assign a moving body having low safety performance (e.g., a moving body having a high likelihood of being monitored in the second monitoring mode) to a supervisor having a capacity level that is high or at least the predetermined value.

Note that in step S420, server device 10 may determine an instantaneous capacity level at that point in time, or may determine a statistical value for the capacity level in a predetermined period (e.g., the past hour including that point in time). The statistical value includes, for example, an average value, a median value, a mode value, a maximum value, a minimum value, and the like, but is not limited thereto.

[Variation 3 on Embodiment]

The present variation will describe, with reference to FIG. 12, an information output control method for assigning moving bodies of the same type to one supervisor. FIG. 12 is a flowchart illustrating operations by server device 10 according to the present variation. FIG. 12 illustrates another example of a method for assigning, to a supervisor, a moving body that has been switched from being monitored using a map screen in which the position and the like of each moving body is displayed (the first monitoring mode) to being monitored using an image (the second monitoring mode).

As illustrated in FIG. 12, if a moving body that needs to be monitored in the second monitoring mode is determined to be present (Yes in S410), server device 10 determines the type of that moving body (S520). The type of moving body may include, in addition to the types described above, a service performed by the moving body (e.g., delivery, transport, or the like), an area where the moving body travels, and the like. For example, server device 10 may obtain information on the type of the moving body from the moving body.

Next, server device 10 assigns the moving body to the supervisor who is monitoring a target having the same type as the type of the moving body that has been determined (S530). In other words, server device 10 assigns moving bodies of the same type to the same supervisor.

Through this, the monitoring load on the one supervisor can be expected to be reduced compared to when monitoring moving bodies of different types.

Note that, for example, server device 10 may assign a supervisor who monitors the moving body for which a determination of Yes was made in step S410 with the type of the moving body prioritized over the capacity level of the supervisor. Then, when the capacity level of one of the plurality of supervisors falls below a predetermined value (an example of a predetermined condition), server device 10 may assign a supervisor who monitors the moving body for which a determination of Yes was made in step S410 with the capacity level of the supervisor prioritized over the type of the moving body. For example, server device 10 may switch from the processing illustrated in FIG. 12 to the processing illustrated in FIG. 10 when the predetermined condition is satisfied.

[Variation 4 on the Embodiment]

The present variation will describe, with reference to FIG. 13, an information output control method for changing a ratio of the number of moving bodies having high performance with respect to safety and the number of moving bodies having high performance with respect to service (an operation ratio) in accordance with the capacity level related to monitoring by the supervisor. FIG. 13 is a flowchart illustrating operations by server device 10 according to the present variation. FIG. 13 illustrates a method for changing the operation ratio of moving bodies having high performance with respect to safety and moving bodies having high performance with respect to service when only a predetermined number of moving bodies (some moving bodies) among a plurality of moving bodies having different performance are operated. Note that FIG. 13 assumes that moving bodies having high performance with respect to safety and moving bodies having high performance with respect to service are operating at a predetermined ratio.

Moving bodies having high performance with respect to service include, for example, moving bodies that travel at high speeds, moving bodies having high delivery efficiency, and the like, but are not limited thereto.

Note that as the ratio of moving bodies having high performance with respect to safety increases, the likelihood that the supervisor will monitor in the second monitoring mode decreases, and the monitoring load decreases. However, as the ratio of moving bodies having high performance with respect to service increases, the performance of the moving bodies with respect to safety is not necessarily high, which means that the likelihood that the supervisor will monitor in the second monitoring mode will increase, and the monitoring load will increase as a result.

As illustrated in FIG. 13, server device 10 uses the foregoing Formula 1 to determine the capacity levels of a plurality of supervisors (S610).

Next, server device 10 determines whether the capacity level is at least a first threshold (S620). Server device 10 determines, for example, whether a statistical value of the capacity level for each of the plurality of supervisors is at least the first threshold. The statistical value includes, for example, an average value, a median value, a mode value, a maximum value, a minimum value, and the like for the capacity level of each of the plurality of supervisors, but is not limited thereto. Note that the first threshold is set in advance and stored in server device 10.

Next, if the capacity level is determined to be at least the first threshold (Yes in S620), the supervisor has the capacity for monitoring. Server device 10 therefore prioritizes the efficiency of the service, and increases the ratio of moving bodies having high performance with respect to the service (S630). As a result, among the moving bodies in operation, the number of moving bodies having high performance with respect to safety decreases, and the number of moving bodies having high performance with respect to service increases, which improves the efficiency of the service. If the capacity level is determined not to be at least the first threshold (No in S620), server device 10 further determines whether the capacity level is no greater than a second threshold (S640). Note that the second threshold is a value lower than the capacity level for the first threshold, and is set in advance and stored in server device 10.

Next, if the capacity level is determined to be no greater than the second threshold (Yes in S640), the supervisor has less capacity for monitoring. Therefore, server device 10 prioritizes the safety of the moving bodies over the efficiency of the service, and increases the ratio of moving bodies having high performance with respect to safety (S650). As a result, when the capacity level is low, among the moving bodies in operation, the number of moving bodies having high performance with respect to safety is increased, and the number of moving bodies having high performance with respect to service is reduced. This reduces the monitoring load on the supervisor.

Note that the plurality of supervisors here are supervisors who supervise the moving bodies as a team, and may be supervisors who are in the same building or space, for example.

[Variation 5 on Embodiment]

The present variation will describe, with reference to FIG. 14, an information output control method for limiting an operating state of a moving body that is operating, in accordance with a capacity level related to monitoring by the supervisor. FIG. 14 is a flowchart illustrating operations by server device 10 according to the present variation.

As illustrated in FIG. 14, server device 10 uses the foregoing Formula 1 to determine the capacity levels of a plurality of supervisors (S610).

Next, if the capacity level is determined to be at least the first threshold (Yes in S620), server device 10 advances the operation of the moving body (S730). Server device 10 may, for example, cancel restrictions on the operation of a moving body for which operation is restricted, or may increase the number of moving bodies operating.

On the other hand, if the capacity level is determined to be no greater than the second threshold (Yes in S640), server device 10 restricts the operation of the moving body in order to lower the capacity level (S750). Restricting the operation of the moving body means reducing the monitoring load for a moving body that needs to be monitored in the second monitoring mode (e.g., in a state that does not require monitoring). Charging the moving body, temporarily stopping the moving body, and the like can be given as examples thereof, but the restriction is not limited thereto.

Server device 10 may prioritize moving bodies having low performance with respect to safety for the restriction of operation, for example.

Through this, the operation of the moving body is restricted when the capacity level is low, and thus according to server device 10, the monitoring load on the supervisor can be reduced.

[Other Embodiments]

An information output control method and the like according to one or more aspects have been described thus far based on an embodiment and the like, but the present disclosure is not limited to the embodiment and the like. Variations on the present embodiment conceived by one skilled in the art, embodiments implemented by combining constituent elements from different other embodiments, and the like may be included as well in the present disclosure as long as they do not depart from the essential spirit of the present disclosure.

For example, in the foregoing embodiment and the like, a display device may be provided for each monitoring mode, or a single display device may be used and the content displayed in the display device may be switched in accordance with the monitoring mode. Additionally, a plurality of screens (e.g., at least two among the safety confirmation screen, the remote operation screen, the map screen, and the vehicle list) may be displayed in a single display device. For example, the safety confirmation screen and the remote operation screen may be displayed in a single display device. Additionally, whether a single screen or a plurality of screens are displayed in a single display device may be made switchable through an operation performed by a supervisor.

The foregoing embodiment and the like described an example in which the processing for switching the monitoring mode (S130) is executed when the first monitoring load is no greater than a reference value. However, the configuration is not limited thereto, and the processing of steps S110 and S120 need not be performed. For example, the processing of step S130 may be executed periodically.

Additionally, the foregoing embodiment and the like described an example in which the risk level is obtained using a table. However, the configuration is not limited thereto, and the risk level may be obtained using a trained model. For example, the trained model takes the information on the periphery of the moving body (e.g., images captured of the periphery of the moving body) as input information, and is trained using the risk level of the moving body as ground truth information.

Additionally, in the foregoing embodiments and the like, in the monitoring mode in which the amount of information per moving body is low (the first monitoring mode), a list of moving bodies, an event in progress, a travel state of the moving body, a state of automatic driving, and the like may be displayed; or a graph representing a path of travel may be displayed, and the event in progress, the travel state of the moving body, the state of automatic driving, and the like may be displayed superimposed on the graph.

Additionally, in the foregoing embodiment and the like, the monitoring mode in which the amount of information per moving body is high (the second monitoring mode) may be, for example, a display in which ambient sounds can be played back.

Additionally, the foregoing embodiment and the like described a risk level that takes on a high value when the likelihood that the moving body can respond to a situation through autonomous control is low, as an example of the likelihood that the moving body can respond to a situation through autonomous control. However, the risk level is not limited thereto, and an index that takes on a low value when the likelihood that the moving body can respond to a situation through autonomous control is low may be used.

Additionally, although the foregoing embodiment and the like described an example in which the peripheral situation manager determines the risk level including the plurality of numerical values, the configuration is not limited thereto. The peripheral situation manager may simply determine whether or not there is a risk level.

Additionally, although the foregoing embodiments and the like described an example in which the detection of objects, the determination as to whether or not a situation can be responded to through autonomous control, and the like are performed in the moving body, at least some of these actions may be performed by the server device. In this case, the server apparatus may store specification information of each moving body.

Additionally, the foregoing embodiment and the like described an example in which the situation when the moving body starts moving is confirmed as an example in which the situation in the periphery of the moving body and the performance of the moving body are taken into consideration. However, whether the moving bodies are traveling on a path wide enough for the moving bodies to pass each other, whether the moving bodies are traveling on a path too narrow for the moving bodies to pass each other, a case where there is an object which moving body A recognizes and stops (stops correctly) but which moving body B ignores, a case where there is an object which moving body A recognizes and stops (stops needlessly) but which moving body B ignores (makes the correct determination, and the like can also be given as examples. The configuration is not limited thereto, however.

Additionally, although the foregoing embodiment and the like described an example in which the second monitoring mode is a monitoring mode in which the information detail level is higher than in the first monitoring mode, the configuration is not limited thereto. The second monitoring mode may be any monitoring mode different from the first monitoring mode, and for example, the monitoring mode may be based on changes in the movement of the moving body, or may be a monitoring mode in which the information detail level is lower than in the first monitoring mode. A monitoring mode based on changes in the movement of the moving body may be, for example, a monitoring mode in which the moving body is monitored using an image from a viewpoint different than that in the first monitoring mode. For example, when the moving body turns right, the server device may switch from the first monitoring mode, in which the moving body is monitored using an image captured in front of the moving body, to the second monitoring mode, in which the moving body is monitored using an image captured in the right-front of the moving body. Additionally, for example, when the moving body overtakes another moving body, the server device may switch from the first monitoring mode, in which the moving body is monitored using an image captured in front of the moving body, to the second monitoring mode, in which the moving body is monitored using an image captured in the right-rear of the moving body.

Additionally, the foregoing embodiment and the like described an example in which the term "information detail level" refers to the complexity (the information detail level) of the information in terms of human recognition, However, the information detail level is not limited thereto, and may refer to the data size of the information. For example, the expression "high information detail level" may mean that the information is large in terms of data size.

Additionally, in the foregoing embodiment and the like, the constituent elements are constituted by dedicated hardware. However, the constituent elements may be realized by executing software programs corresponding to those constituent elements. Each constituent element may be realized by a program executing unit such as a CPU or a processor reading out and executing a software program recorded into a recording medium such as a hard disk or semiconductor memory.

The orders in which the steps in the flowcharts are performed are for describing the present disclosure in detail, and other orders may be used instead. Some of the above-described steps may be executed simultaneously (in parallel) with other steps, and some of the above-described steps may not be executed.

Additionally, the divisions of the function blocks in the block diagrams are merely examples, and a plurality of function blocks may be realized as a single function block, a single function block may be divided into a plurality of function blocks, or some functions may be transferred to other function blocks. Additionally, the functions of a plurality of function blocks having similar functions may be processed by a single instance of hardware or software, in parallel or time-divided.

The server device according to the foregoing embodiment and the like may be implemented by a single device, or as a plurality of devices. When the server device is implemented by a plurality of devices, the constituent elements of the server device may be distributed throughout the plurality of devices in any manner. Furthermore, when the server device is realized as a plurality of devices, the communication method used among the plurality of devices is not particularly limited, and may be wireless communication or wired communication. A combination of wireless communication and wired communication may also be used among the devices.

Each of the constituent elements described in the foregoing embodiment and the like may be realized as software, or typically as an LSI circuit, which is an integrated circuit. These devices can be implemented individually as single chips, or may be implemented with a single chip including some or all of the devices. Although the term "LSI" is used here, other names, such as IC, system LSI, super LSI, ultra LSI, and so on are used depending on the degree of integration. Further, the manner in which the circuit integration is achieved is not limited to LSI, and it is also possible to use a dedicated circuit (a generic circuit that executes a dedicated program) or a general purpose processor. It is also possible to employ a FPGA (Field Programmable Gate Array) which is programmable after the LSI circuit has been manufactured, or a reconfigurable processor in which the connections or settings of the circuit cells within the LSI circuit can be reconfigured. Furthermore, if other technologies that improve upon or are derived from semiconductor technology enable integration technology to replace LSI circuits, then naturally it is also possible to integrate the constituent elements using that technology.

"System LSI" refers to very-large-scale integration in which multiple processing units are integrated on a single chip, and specifically, refers to a computer system configured including a microprocessor, read-only memory (ROM), random access memory (RAM), and the like. A computer program is stored in the ROM. The system LSI circuit realizes the functions of the devices by the microprocessor operating in accordance with the computer program.

Additionally, one aspect of the present disclosure may be a computer program that causes a computer to execute each of the characteristics steps included in an information output control method illustrated in any one of FIGS. 3, 4, 9, 10, and 12 to 14.

Additionally, for example, the program may be a program to be executed by a computer. Furthermore, aspects of the present disclosure may be realized as a computer-readable non-transitory recording medium in which such a program is recorded. For example, such a program may be recorded in the recording medium and distributed or disseminated. For example, by installing a distributed program in a device having another processor and causing the processor to execute the program, the device can perform each of the processes described above.

[Industrial Applicability]

The present disclosure is useful in devices and the like for remotely monitoring moving bodies capable of autonomous control.

[Reference Signs List]

1 Information output system
10 Server device (information output control device)
11 Moving body information manager
12 Peripheral situation manager (obtainer)
13 First storage
14 Second storage
15 Monitoring mode determiner (obtainer, first output controller, second output controller)

16 Display content manager
17 Remote controller
20 Terminal
21 First display
22 Second display
23 Third display
24 Fourth display
25 Supervisor state manager
26 Input acceptor
101 First type moving body (moving body)
102 Second type moving body (moving body)
200 Table

## Claims

1. An information output control method performed by an information output control device, the information output control method comprising:

   outputting, in a first mode, information for monitoring or controlling a moving body that travels through automatic driving, to a terminal for an operator to monitor or control the moving body remotely;
   obtaining first information related to an event or a situation in a periphery arising when the moving body moves, and second information related to a performance of the moving body;
   determining, based on at least the first information, a likelihood that the moving body can respond to the event or the situation through autonomous control; and
   when the likelihood determined exceeds a threshold specified based on the second information, outputting the information for monitoring or controlling the moving body to the terminal in a second mode different from the first mode.

2. The information output control method according to claim 1,

   wherein the first information includes at least one indication among an indication that an obstruction with which the moving body may collide is detected in the periphery, an indication that the moving body has moved to a predetermined place, an indication of a state to which the moving body cannot respond through automatic driving, or an indication that a predetermined state is continuing, and
   the information output control method further comprising:
   obtaining a risk level indicating a level of danger of a situation the moving body is in, based on the at least one indication, as information for determining the likelihood that the moving body can respond.

3. The information output control method according to claim 2,
   wherein the determining of the likelihood that the moving body can respond is performed according to whether the risk level obtained has changed over time.

4. The information output control method according to any one of claims 1 to 3,

   wherein the second information includes at least one item of information among a detection performance of an image capturing device provided to the moving body, a braking performance, a control performance of the automatic driving, or a presence or absence of a safety device, and
   the threshold is specified based on the at least one item of information in the second information.

5. The information output control method according to claim 4,

   wherein the operator monitors or controls two or more moving bodies, each being the moving body,
   the at least one indication in the first information and the at least one item of information in the second information are obtained from each of the two or more moving bodies,
   the threshold is specified individually for each of the two or more moving bodies based on the at least one item of information in the second information of the moving body, and
   whether the threshold is exceeded is determined individually for each of the two or more moving bodies based on the first information of the moving body and the threshold of the moving body.

6. The information output control method according to any one of claims 1 to 5,

   wherein the first mode is a display mode that does not include an image captured by an image capturing device provided to the moving body, and
   the second mode is a display mode that includes displaying the image.

7. The information output control method according to any one of claims 1 to 5,

   wherein the first mode is a display mode that does not display the moving body with emphasis, and
   the second mode is a display mode in which additional information for displaying the moving body with emphasis is superimposed.

8. The information output control method according to any one of claims 1 to 7, further comprising:

   calculating a monitoring load on the operator when switching from the first mode to the second mode,
   wherein the outputting of the information for monitoring or controlling the moving body is performed in the second mode when the monitoring load calculated is no greater than a reference value that is based on an information detail level that can be handled by the operator.

9. The information output control method according to claim 8,
   wherein when the monitoring load is greater than the reference value, the outputting of the information for monitoring or controlling the moving body in the first mode is continued.

10. The information output control method according to claim 8,

    wherein the operator monitors or controls two or more moving bodies, each being the moving body, and
    the information output control method further comprising:
    adjusting the monitoring load on the operator to be no greater than the reference value by adjusting a total number of images displayed simultaneously.

11. The information output control method according to claim 7, further comprising:
    adjusting the monitoring load on the operator to be no greater than a reference value that is based on an information detail level that can be handled by the operator, by adjusting whether the additional information is present or absent.

12. The information output control method according to any one of claims 1 to 11,

    wherein a plurality of moving bodies, each being the moving body, are remotely monitored or controlled by a plurality of operators, each being the operator,
    the information output control method further comprising:

    calculating an overall information detail level that is a total of each of information detail levels of information that is displayed for corresponding ones of the plurality of operators,
    obtaining an overall reference value that is a reference value of an information detail level for the plurality of operators as a whole, based on an information detail level that can be handled by each of the plurality of operators, and
    adjusting the information detail levels displayed for the plurality of operators to make the overall information detail level no greater than the overall reference value.

13. The information output control method according to any one of claims 1 to 12,
    wherein when the likelihood determined does not exceed the threshold, the outputting in the first mode is continued.

14. The information output control method according to any one of claims 1 to 13,
    wherein the second mode is a mode in which an information detail level related to the moving body is higher than in the first mode.

15. An information output control device comprising:

a first output controller that outputs, in a first mode, information for monitoring or controlling a moving body that travels through automatic driving, to a terminal for an operator to monitor or control the moving body remotely;

an obtainer that obtains first information related to an event or a situation in a periphery arising when the moving body moves, and second information related to a performance of the moving body;

a peripheral situation manager that determines, based on at least the first information, a likelihood that the moving body can respond to the event or the situation through autonomous control; and

a second output controller that, when the likelihood determined exceeds a threshold specified based on the second information, outputs the information for monitoring or controlling the moving body to the terminal in a second mode different from the first mode.

16. A program for causing a computer to execute the information output control method according to any one of claims 1 to 14.

# FIG. 1

## FIG. 2

Moving body identification information,
moving body state information
(travel state, position information),
image information,
detection information

Remote control instruction

EP 4 468 272 A1

# FIG. 3

Start

Output in first monitoring mode — S100

Calculate current first monitoring load — S110

S120

First monitoring load no greater than reference value?

No

Yes

Switch monitoring mode for each moving body — S130

# FIG. 4

S130

Switch monitoring mode
for each moving body

Obtain moving body list — S200

Obtain risk level of each moving body — S210

Moving body for which risk
level has fluctuated present? — S220

No

Yes

Obtain list of moving bodies for which risk level
has fluctuated, obtain first monitoring load — S230

Obtain performance of moving body for
one moving body in list — S240

Determine if risk level is greater than threshold — S250

Determine second monitoring mode for moving body — S260

Calculate second monitoring load and overall
monitoring load in second monitoring mode — S270

Overall monitoring load no greater
than reference value? — S280

No

Yes

Switch monitoring mode of moving body
to second monitoring mode — S290

Moving body for which risk level
has fluctuated remaining? — S300

Yes

No

End

# FIG. 5

Supervisor

21 First monitoring mode    Second monitoring mode    23

(a1)                        (a2)                      (a3)

Increased risk level

Supervisor

21 First monitoring mode    Second monitoring mode    23

(b1)                        (b2)                      (b3)

# FIG. 6

Supervisor

First monitoring mode — 21

Second monitoring mode — 23

(a1)

(a2)

(a3)

Supervisor

Increased risk level

A1 First monitoring mode

Stop

21

Second monitoring mode — 23

(b1)

(b2)

(b3)

EP 4 468 272 A1

# FIG. 7

**Increased risk level** Supervisor

(a1)

A1 First monitoring mode
21

Stop

(a2)

F Second monitoring mode
23

(a3)

**Increased risk level** Supervisor **Increased risk level**

(b1)

A1 First monitoring mode

Stop

20ft

A2 (b2)

F Second, third monitoring modes
23

(b3)

Second monitoring mode

Third monitoring mode

EP 4 468 272 A1

# FIG. 8

Fourth monitoring mode

23

F

# FIG. 9

S130a

Switch monitoring mode for each moving body

Obtain moving body list ~S200

Obtain risk level of each moving body ~S210

Moving body for which risk level has fluctuated present? ~S220 — No

↓ Yes

Obtain list of moving bodies for which risk level has fluctuated, obtain first monitoring load ~S230

Obtain performance of moving body for one moving body in list ~S240

Determine if risk level is greater than threshold ~S250

Determine second monitoring mode for moving body ~S260

Calculate second monitoring load and overall monitoring load in second monitoring mode ~S270

Overall monitoring load no greater than reference value? ~S280 — No

Yes ↓

Switch monitoring mode of moving body to second monitoring mode ~S290

Assign to other supervisor ~S310

Moving body for which risk level has fluctuated remaining? ~S300 — Yes

↓ No

End

# FIG. 10

```
                    ┌─────────────┐
                    │    Start    │
                    └─────────────┘
                           │
    ┌──────────────────────▼──────────────────────┐
    │  ┌────────────────────────────────────────┐  │  S410
    │  │  Moving body requiring monitoring       │
    │  │  in second monitoring mode arisen?      │
    │  └────────────────────────────────────────┘
    │   No                    │ Yes
    │                         ▼
    │         ┌──────────────────────────────────┐  S420
    │         │ Determine capacity levels of      │
    │         │ plurality of supervisors          │
    │         └──────────────────────────────────┘
    │                         │
    │                         ▼
    │         ┌──────────────────────────────────┐  S430
    │         │ Assign moving body based on       │
    │         │ result of determining capacity    │
    │         │ level                             │
    │         └──────────────────────────────────┘
    │                         │
    │                         ▼
                    ┌─────────────┐
                    │     End     │
                    └─────────────┘
```

# FIG. 11

200

| | | Moving body type | | |
|---|---|---|---|---|
| | | Robot A | Robot B | Drone A |
| Monitoring mode | Map screen A | 0.05 | 0.05 | 0.05 |
| | Map screen B | 0.15 | 0.1 | 0.15 |
| | Image screen A | 0.4 | 0.5 | — |
| | Image screen B | 0.3 | 0.35 | 0.3 |
| | Image screen C | — | — | 0.4 |

# FIG. 12

```
                          ┌──────────┐
                          │  Start   │
                          └────┬─────┘
       ┌───────────────────────▼────────────────┐
       │  ╱ Moving body requiring monitoring ╲   │  ─── S410
    No ◄  ╲ in second monitoring mode arisen? ╱
              │ Yes
              ▼
   ┌────────────────────────────────────┐  ─── S520
   │   Determine type of moving body    │
   └──────────────────┬─────────────────┘
                      ▼
   ┌────────────────────────────────────┐  ─── S530
   │  Assign moving body to supervisor  │
   │  monitoring target having same type│
   │  as determined type of moving body │
   └──────────────────┬─────────────────┘
                      ▼
                ┌──────────┐
                │   End    │
                └──────────┘
```

## FIG. 13

```
        Start

          │
          ▼
┌──────────────────────────┐  S610
│ Determine capacity levels of │
│ plurality of supervisors     │
└──────────────────────────┘
          │
          ▼                    S620
    ╱ Capacity level at least ╲─────────────────────────┐
    ╲ first threshold?        ╱  No                      │
          │ Yes                                          ▼                  S640
          ▼                                        ╱ Capacity level no greater ╲
┌──────────────────────┐  S630                     ╲ than second threshold?     ╱  No
│ Increase ratio of    │                                │ Yes                       │
│ moving bodies having │                                ▼                   S650     │
│ high performance with│                          ┌──────────────────────┐          │
│ respect to service   │                          │ Increase ratio of    │          │
└──────────────────────┘                          │ moving bodies having │          │
          │                                        │ high performance with│          │
          ▼◄───────────────────────┐              │ respect to safety    │          │
        End                         │              └──────────────────────┘          │
                                    │                        │                        │
                                    └────────────────────────┴────────────────────────┘
```

## FIG. 14

```
        Start

          │
          ▼
┌──────────────────────────┐  S610
│ Determine capacity levels of │
│ plurality of supervisors     │
└──────────────────────────┘
          │
          ▼                    S620
    ╱ Capacity level at least ╲─────────────────────────┐
    ╲ first threshold?        ╱  No                      │
          │ Yes                                          ▼                  S640
          ▼                                        ╱ Capacity level no greater ╲
┌──────────────────────┐  S730                     ╲ than second threshold?     ╱  No
│ Advance operation of │                                │ Yes                       │
│ moving body          │                                ▼                   S750     │
└──────────────────────┘                          ┌──────────────────────┐          │
          │                                        │ Restrict operation of│          │
          ▼◄───────────────────────┐              │ moving body          │          │
        End                         │              └──────────────────────┘          │
                                    │                        │                        │
                                    └────────────────────────┴────────────────────────┘
```

## INTERNATIONAL SEARCH REPORT

International application No.

**PCT/JP2022/046670**

### A. CLASSIFICATION OF SUBJECT MATTER

*G08G 1/09*(2006.01)i; *G16Y 10/40*(2020.01)i; *G16Y 20/20*(2020.01)i; *G16Y 40/30*(2020.01)i
FI:   G08G1/09 V; G16Y40/30; G16Y20/20; G16Y10/40

According to International Patent Classification (IPC) or to both national classification and IPC

### B. FIELDS SEARCHED

Minimum documentation searched (classification system followed by classification symbols)

G08G1/09; G16Y10/40; G16Y20/20; G16Y40/30

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2021/199230 A1 (NEC CORPORATION) 07 October 2021 (2021-10-07) paragraphs [0015]-[0059], fig. 1-5 | 1-7, 13-16 |
| A | | 8-12 |
| Y | JP 2021-109591 A (TOYOTA MOTOR CORP) 02 August 2021 (2021-08-02) paragraphs [0008]-[0012] | 1-7, 13-16 |
| Y | JP 2015-206655 A (DENSO CORP) 19 November 2015 (2015-11-19) paragraphs [0016], [0023]-[0030], [0034]-[0038] | 1-7, 13-16 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **31 January 2023** | **14 February 2023** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

INTERNATIONAL SEARCH REPORT
Information on patent family members

International application No.

**PCT/JP2022/046670**

| Patent document cited in search report | | | Publication date (day/month/year) | Patent family member(s) | Publication date (day/month/year) |
|---|---|---|---|---|---|
| WO | 2021/199230 | A1 | 07 October 2021 | (Family: none) | |
| JP | 2021-109591 | A | 02 August 2021 | (Family: none) | |
| JP | 2015-206655 | A | 19 November 2015 | (Family: none) | |

Form PCT/ISA/210 (patent family annex) (January 2015)

**EP 4 468 272 A1**

**REFERENCES CITED IN THE DESCRIPTION**

**Patent documents cited in the description**

- JP 6566995 B